(19) Europäisches Patentamt
European Patent Office
Office européen des brevets

(11) **EP 4 202 584 B1**

(12) **EUROPEAN PATENT SPECIFICATION**

(45) Date of publication and mention
of the grant of the patent:
**13.11.2024 Bulletin 2024/46**

(21) Application number: **22209967.3**

(22) Date of filing: **28.11.2022**

(51) International Patent Classification (IPC):
***G05B 23/02*** *(2006.01)*

(52) Cooperative Patent Classification (CPC):
**G05B 23/0278**

(54) **INFORMATION PROCESSING DEVICE, INFORMATION PROCESSING METHOD AND INFORMATION PROCESSING PROGRAM**

INFORMATIONSVERARBEITUNGSVORRICHTUNG, INFORMATIONSVERARBEITUNGSVERFAHREN UND INFORMATIONSVERARBEITUNGSPROGRAMM

DISPOSITIF DE TRAITEMENT D'INFORMATIONS, PROCÉDÉ DE TRAITEMENT D'INFORMATIONS ET PROGRAMME DE TRAITEMENT D'INFORMATIONS

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **21.12.2021 JP 2021207245**

(43) Date of publication of application:
**28.06.2023 Bulletin 2023/26**

(73) Proprietor: **OMRON Corporation Kyoto 600-8530 (JP)**

(72) Inventors:
• **MIYAMOTO, Kota**
  **Kyoto-shi, 600-8530 (JP)**
• **YAMADA, Hiroomi**
  **Kyoto-shi, 600-8530 (JP)**
• **KAWANOUE, Shinsuke**
  **Kyoto-shi, 600-8530 (JP)**

(74) Representative: **Mewburn Ellis LLP Aurora Building Counterslip Bristol BS1 6BX (GB)**

(56) References cited:
**WO-A1-2021/241578      JP-A- 2018 120 343**

**Description**

BACKGROUND OF THE INVENTION

Field of the Invention

This disclosure relates to an information processing device, an information processing method and an information processing program.

Description of the Background Art

Production lines in facilities like plants and factories include a plurality of mechanisms, for example, conveyers and robot arms. In case an abnormal event occurs in one or more mechanisms in the production line, the whole operation possibly shuts down, which may incur tremendous damage. To avoid that, maintenance workers regularly perform the routine check of such production lines in plants and factories for any abnormal event or a predictive sign of abnormality.
Supposing that an abnormal event or a predictive sign of abnormality is detected in any mechanism of the production line, what really caused or will cause the abnormal event may possibly lie in any mechanism(s) previous to the abnormality-detected mechanism per se. Hence, a cause-and-effect relationship between the mechanisms in the production line is an important factor that needs to be addressed in order to accurately know what really caused the abnormal event. An increasing number of mechanisms are used in production lines these days, and their operating conditions continue to change constantly. It may be thus very difficult to exactly grasp the cause-and-effect relationships among all of mechanisms used in a production line.
Conventionally, a skilled maintenance worker(s) looks into the cause-and-effect relationship among a plurality of mechanisms in a production line based on his/her own professional expertise and experience, trying to detect the occurrence of any abnormal event or a predictive sign of abnormality in the production line. A more advanced technology is desirably developed and made available that can visualize a cause-and-effect relationship between the plurality of mechanisms in a production line to allow any unskilled or inexperienced workers to perform the maintenance operation.
For example, the apparatus described in Japanese Patent Laying-Open No. 2009-64407 is directed to visualizing the detection of an abnormal event by modelling a relationship between apparatuses in a production line.
JP2018120343A discloses a process diagnostic device, a process diagnostic method, and a process diagnostic system. In one embodiment the process diagnostic device comprises a data acquisition unit, an abnormality detection unit, a contribution-rate estimation unit, and an event estimation unit. The data acquisition unit acquires time-sequential data of a process variable that shows a state of a diagnostic target process. The abnormality detection unit detects an abnormality of the diagnostic target process according to the time-sequential data and a predetermined standard of abnormality detection. The contribution-rate estimation unit estimates a contribution rate that shows a rate of the contribution of each process variable to the abnormality when the abnormality of the diagnostic target process is detected. The event estimation unit estimates an event that can possibly be a factor of the abnormality from among the predefined and registered events according to the estimated contribution rate.

SUMMARY OF THE INVENTION

In the meantime, there are a broad range of possible abnormal events that need to be addressed, which often require a larger number of pieces of abnormality data in order to identify what is exactly causing such abnormal events. Thus, no easy way of identifying abnormal events has so far been available.
To address these issues of the known art, the present disclosure is directed to providing an information processing device, an information processing method and an information processing program that can estimate an abnormality causal factor(s) in a simplified manner.
In a first aspect, the present invention provides an information processing device according to claim 1. The information processing device thus characterized may succeed in estimating an abnormality causal factor in a simplified manner.
The information processing device is equipped with a display configured to display the abnormality causal factor estimated for the at least one of the plurality of cause-and-effect models based on a result of estimation obtained by the estimator. Thus, the abnormality causal factor may be readily estimated from the estimation result displayed on the display.
The information processing device may be further equipped with a receiver configured to receive an input from a user of a selected one of the plurality of cause-and-effect models. The display displays the abnormality causal factor estimated for the selected one of the plurality of cause-and-effect models based on the result of estimation obtained by the estimator in response to reception of the input of the selected one of the plurality of cause-and-effect models by the receiver. The cause-and-effect models may be selectable in accordance with a user's input. This may allow the abnormality causal factor to be estimated based on the selected cause-and-effect model that suits a user's idea or preference.

The information processing device is equipped with an event-related matter registration unit configured to register an event list for an abnormal event. The event list thus registered may allow the abnormality causal factor to be readily estimated from the past data.

The event list contains pieces of information including an event outline, event data of a generated event, the estimation result of the estimator, a confirmed event associated with the plurality of mechanisms, details of an event activity, and the contribution ratio of the variable contributing to abnormality for said abnormal event. The abnormality causal factor may be readily estimated from the event list thus containing various pieces of data.

The information processing device is equipped with an event estimator configured to calculate a degree of similarity between the contribution ratios included in the event list and the calculated contribution ratios of the variables contributing to abnormality. The abnormality causal factor may be readily estimated from the degree of similarity to the past event list.

In a second aspect, the present invention provides an information processing method according to claim 3. The information processing method thus characterized may succeed in estimating an abnormality causal factor in a simplified manner.

In a third aspect, the present invention provides an information processing program according to claim 4. The information processing program thus characterized may succeed in estimating an abnormality causal factor in a simplified manner.

The foregoing and other objects, features, aspects and advantages of the present invention will become more apparent from the following detailed description of the present invention when taken in conjunction with the accompanying drawings.

BRIEF DESCRIPTION OF THE DRAWINGS

Fig. 1 is a block diagram that schematically illustrates a given situation in which a process analyzer 1 is used, process analyzer 1 being an example of the information processing device according to an embodiment.

Fig. 2 is a block diagram that schematically illustrates exemplified hardware elements of process analyzer 1 according to the embodiment.

Fig. 3 is a block diagram that schematically illustrates exemplified hardware elements of PLC2 according to the embodiment.

Fig. 4 is a block diagram that schematically illustrates exemplified software elements of process analyzer 1 according to the present invention.

Figs. 5A and 5B are a view illustrating a process carried out by a first relationship identifier 114 of process analyzer 1 according to the embodiment.

Figs. 6A and 6B are a view illustrating the process carried out by the first relationship identifier 114 of process analyzer 1 according to the embodiment.

Fig. 7 is a flow chart of a process carried out by a second relationship identifier 115 of process analyzer 1 according to the embodiment.

Fig. 8 is a conceptual diagram in which a program configuration according to the embodiment is expressed in a tree-like structure.

Figs. 9A and 9B are a view illustrating a cause-and-effect relationship for control according to the embodiment.

Fig. 10 is a block diagram that illustrates a process carried out by a third relationship identifier 116 of process analyzer 1 according to the embodiment.

Figs. 11A and 11B are a flow chart of a process carried out by a cause-and-effect model for data generator 142 according to the embodiment.

Fig. 12 is a view illustrating a process to generate non-directed graph information based on status data according to the embodiment.

Fig. 13 is a view illustrating a cause-and-effect relationship for control based on status data 223 by third relationship identifier 116 in a production process of a production line 3 according to the embodiment.

Fig. 14 is a view illustrating abnormality detection by an abnormality detector 117 according to the embodiment.

Figs. 15A and 15B are a view illustrating abnormality detection by the abnormality detector 117 according to the embodiment.

Fig. 16 is a view illustrating estimation of an abnormality causal factor by an estimator 119 according to the embodiment.

Fig. 17 is a view illustrating estimation of an abnormality causal factor by estimator 119 according to the embodiment.

Figs. 18A to 18C are a view illustrating estimation of an abnormality causal factor by estimator 119 according to the embodiment.

Fig. 19 is a table showing an event list generated by an event-related matter registration unit 120 according to the embodiment.

Fig. 20 is a table that illustrates an event estimation process using the event list by an event estimator 121 according to the embodiment.

Fig. 21 is a flow chart of the event estimation process using the event list by the event estimator 121 according to the embodiment.

DESCRIPTION OF THE PREFERRED EMBODIMENTS

Embodiments are hereinafter described in detail referring to the accompanying drawings. The same or similar components and units in the drawings are simply illustrated with the same reference signs, redundant description of which will basically be omitted. Modified embodiments hereinafter described may be suitably selected and combined.

A process analyzer according to an embodiment is hereinafter described with reference to the accompanying drawings. The process analyzer is an example of the information processing device disclosed herein.

<1. Example of application>

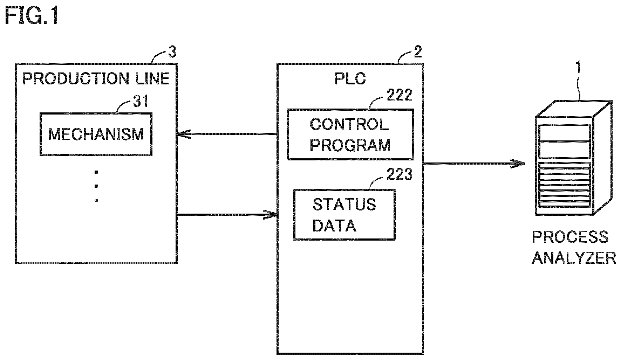

Fig. 1 is a block diagram that schematically illustrates a given situation in which a process analyzer 1 is used. Process analyzer 1 is an example of the information processing device according to an embodiment. As illustrated in Fig. 1, process analyzer 1 according to this embodiment obtains status data 223 relevant to statuses of a plurality of mechanisms 31 of a production line 3. Production line 3 may include a plurality of apparatuses or include one apparatus alone such as a packaging machine. The number of apparatuses is not particularly limited insofar as any product(s) is producible in this product line. Each mechanism 31 may include one or a plurality of apparatuses or may include part of an apparatus. The number of apparatuses is not particularly limited insofar as the mechanism is allowed to execute any step(s) of a production process. In case one mechanism 31 includes part of an apparatus, the plurality of mechanisms 31 altogether may constitute one whole apparatus. In case one apparatus executes a plurality of processing steps, the apparatus may be regarded as including different mechanisms 31. Supposing that one apparatus executes first and second processing steps, the apparatus in charge of the first processing step may be regarded as a first mechanism 31, and the apparatus in charge of the second processing step may be regarded as a second mechanism 31. Status data 223 may contain all kinds of data associated with the statuses of mechanisms 31 included in production line 3. An apparatus, in whole or in part, may constitute each mechanism 31. Examples of the apparatus may include conveyer, robot arm, servo motor, cylinder (molding machine), suctioning pad, cutter, and sealer. Each mechanism 31 may be a multifunction apparatus including, for example, printing device, mounting device, reflow furnace and/or substrate testing device. Mechanisms 31 may each further include, other than the before-mentioned apparatuses that involve some kind of physical operations, a device(s) in charge of internal processes, for example, a device(s) that detects certain information using sensors, a device(s) that obtains data from sensors, a device(s) that detects certain information in obtained data, and/or a device(s) that processes obtained data. Taking, for instance, a production line including an optical sensor that detects a mark attached to a target product being transported on a conveyer, mechanism 31 may be the optical sensor or a device that uses information detected by the optical sensor. Each piece of status data 223 may be data indicating at least one of the following examples; torque, speed, acceleration rate, temperature, electric current, voltage, pneumatic pressure, pressure, flow rate, position, dimension (height, length, width), and area dimension. Such status data 223 may be obtained by using a measuring device, for example, a known sensor or camera. For example, a float sensor may be used to obtain the flow rate. An image sensor may be used to obtain the position, dimension, and area dimension.

Status data 223 may include data obtained from one or a plurality of measuring devices. Status data 223 may be directly obtained by a measuring device or may be data obtainable by processing the data of the measuring device, for example, position data obtainable from image data. Each piece of status data 223 is obtained correspondingly to each mechanism 31. The measuring devices are arranged in a manner that they can monitor mechanisms 31 of production line 3. A PLC 2 activates production line 3 and collects status data 223 from each measuring device. A controller 11 obtains, from PLC 2, status data 223 relevant to the status of each mechanism 31 when production line 3 is normally operating.

Process analyzer 1 according to this embodiment obtains a control program 222 for control of the whole operation of production line 3. Control program 222 may include all kinds of programs used for control of the operation of each mechanism 31 of production line 3. Control program 222 may include one or a plurality of programs. Control program 222 may be described using at least one of the following languages so that this program is executable by PLC2; ladder diagram language, function block diagram language, structured text language, instruction list language, sequential function chart language and C language. In this embodiment, the operation of production line 3 is controlled by PLC (programmable logic controller) 2. Process analyzer 1 obtains, from PLC 2, a plurality of pieces of status data 223 and control program 222.

Process analyzer 1 identifies a cause-and-effect relationship (first cause-and-effect relationship) between a plurality of mechanisms 31 in a production process carried out in production line 3. In one example, the first cause-and-effect relationship may otherwise be referred to as a cause-and-effect model for design.

Process analyzer 1 analyzes control program 222 and thereby identifies a cause-and-effect relationship (second cause-and-effect relationship) between the plurality of mechanisms 31 based on control program 222. In one example, the second cause-and-effect relationship may otherwise be referred to as a cause-and-effect model for control.

Process analyzer 1 analyzes status data 223 thus obtained and thereby identifies a cause-and-effect relationship (third cause-and-effect relationship) between the plurality of mechanisms 31. In one example, the third cause-and-effect relationship may otherwise be referred to as a cause-and-effect model for data.

Process analyzer 1 according to this embodiment estimates an abnormality causal factor based on each of the cause-and-effect models and a result of abnormality detection.

<2. Hardware configuration of process analyzer>

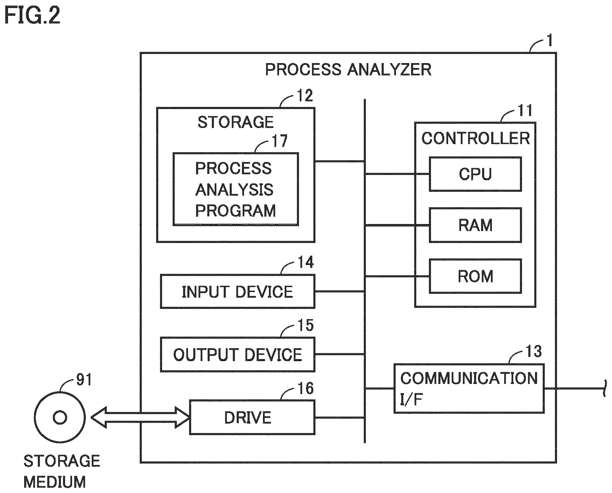

Fig. 2 is a block diagram that schematically illustrates exemplified hardware elements of process analyzer 1 according to the embodiment. As illustrated in Fig. 2, process analyzer 1 according to this embodiment is a computer including a controller 11, a storage 12, a communication interface 13, an input device 14, an output device 15, and a drive 16, in which these devices are electrically connected to one another. Referring to Fig. 2, the "communication I/F" refers to the communication interface of this analyzer.

Controller 11 includes a hardware processor; CPU (Central Processing Unit), RAM (Random Access Memory) and ROM (Read Only Memory). Controller 11 controls these elements correspondingly to an information process to be executed. Storage 12 is an auxiliary storage, for example, a hard disc drive or a solid state drive, in which a process analysis program 17 to be executed by controller 11, for example, is storable.

This process analysis program 17 causes process analyzer 1 to analyze the cause-and-effect relationship between a plurality of mechanisms 31 in a production process carried out in production line 3 based on status data 223, control program 222 and information relevant to the production process in production line 3.

Communication interface 13 is, for example, an interface for wired or wireless communication through a network, examples of which include wired LAN (Local Area Network) module and wireless LAN module. Process analyzer 1 is allowed to perform data communication with PLC 2 through a network using communication interface 13. The network used then may be one suitably selected from the Internet, wireless communication networks, mobile communication networks, telephone networks, and exclusive networks.

Input device 14 is used to input data and instructions, examples of which include mouse and keyboard. Output device 15 is used to output data and instructions, examples of which include display and speaker. An operator can operate process analyzer 1 using input device 14 and output device 15.

Drive 16 is used to read a program(s) stored in a storage medium 91, examples of which include CD drive and DVD drive. The type of drive 16 to be used may be decided suitably for the type of storage medium 91. Process analysis program 17 may be stored in this storage medium 91.

In storage medium 91, information of a program(s), for example, is storable electrically, magnetically, optically, mechanically or chemically in a manner that the information stored in this medium is readable by a computer, a device or a machine. Process analyzer 1 may obtain process analysis program 17 from this storage medium 91.

Fig. 2 illustrates an example of storage medium 91; a disc-like storage medium such as CD or DVD. Storage medium 91 may be selected from any other storage mediums instead of the disk-like mediums. Examples of the other storage mediums may include semiconductor memories such as flash memories.

The hardware elements of process analyzer 1 may be deleted, replaced or added suitably for what is required of the embodiment. For instance, controller 11 may include a plurality of processors. Process analyzer 1 may include a plurality of information processing devices. Process analyzer 1 may be an information processing device designed for exclusive use in an offered service(s) or a general-purpose server device or PC (Personal Computer).

<3. PLC>

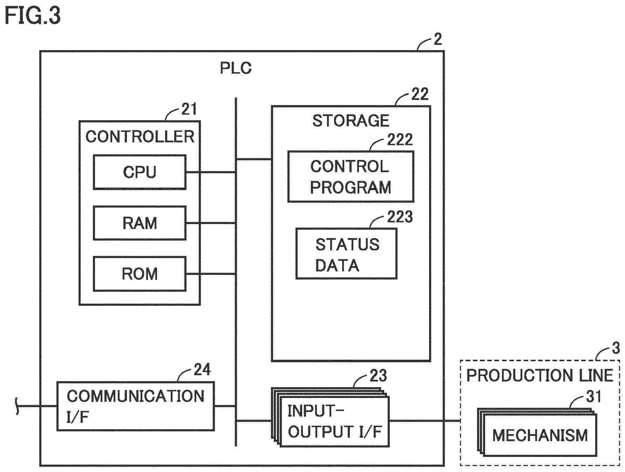

Fig. 3 is a block diagram that schematically illustrates exemplified hardware elements of PLC2 according to this embodiment. As illustrated in Fig. 3, PLC 2 is a computer including a controller 21, a storage 22, an input-output interface 23 and a communication interface 24, in which these devices and interfaces are electrically connected to one another. PLC 2 is thus allowed to control the operation of each mechanism 31 of production line 3. Referring to Fig. 3, the "input-output I/F" and "communication I/F" respectively refer to the input-output interface and communication interface.

Controller 21 includes, for example, a CPU, RAM and ROM and is configured to process pieces of information based on a program(s) and data. Storage 22 includes, for example, RAM and/or ROM, in which control program 222 and status data 223 are storable. Control program 222 is a program for control of the whole operation of production line 3. Status data 223 is associated with the status of each mechanism 31. Input-output interface 23 is an interface for connection to an external apparatus(s). This interface is suitably adapted to a target apparatus to be connected. In this embodiment, PLC 2 is connected to production line 3 through input-output interface 23. In case different pieces of status data are obtainable for one apparatus, this one apparatus may be regarded as a plurality of mechanisms 31 or one mechanism 31. Hence, the number of input-output interfaces 23 may be equal to or may differ from the number of mechanisms 31 of production line 3.

Communication interface 24 may be a wired LAN module or a wireless LAN module used for wired communication or wireless communication. Communication interface 24 allows PLC 2 to perform data communication with process analyzer 1.

To be more specific, the hardware elements of PLC 2 may be deleted, replaced or added suitably for what is required of the embodiment. For instance, controller 21 may include a plurality of processors. Storage 22 may include the RAM and ROM of controller 21. Storage 22 may be an auxiliary storage, for example, a hard disc drive or a solid state drive. PLC 2 may be an information processing device designed for exclusive use in an offered service(s) or may be replaced with a general-purpose desktop PC or a tablet PC depending on a target to be controlled.

<4. Software elements of process analyzer>

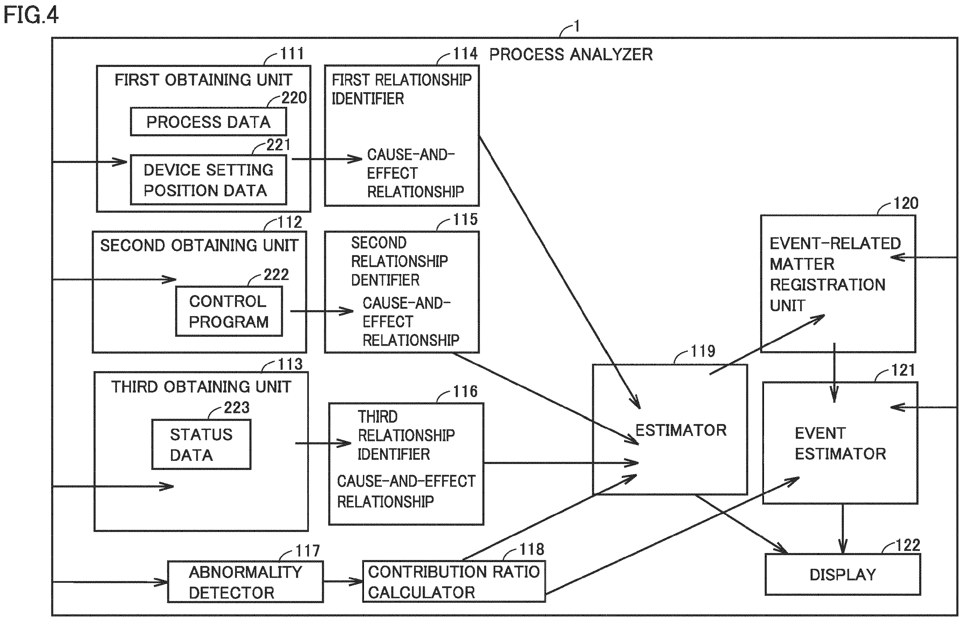

Fig. 4 is a block diagram that schematically illustrates exemplified software elements of process analyzer 1 according to the invention.

As illustrated in Fig. 4, process analysis program 17 stored in storage 12 is imported into the RAM by controller 11 of process analyzer 1. Then, controller 11 interprets and runs process analysis program 17 in the RAM by the CPU and thereby controls the respective elements. As a result of that, process analyzer 1 according to this embodiment includes the following elements illustrated in Fig. 4 as software modules; first obtaining unit 111, second obtaining unit 112, third obtaining unit 113, first relationship identifier 114, second relationship identifier 115, third relationship identifier 116, abnormality detector 117, contribution ratio calculator 118, estimator 119, event-related matter registration unit 120, event estimator 121, and display 122.

First obtaining unit 111 obtains process data 220 and device setting position data 221 as information associated with a process carried out in production line 3. Second obtaining unit 112 obtains control program 222 used to control the whole operation of production line 3. Third obtaining unit 113 obtains status data 223. Process data 220 and device setting position data 221; information associated with a process carried out in production line 3, may be obtained from PLC 2 instead of first obtaining unit 111. Optionally, a user may input these pieces of data or may obtain them from information prestored in the storage.

First relationship identifier 114 identifies a cause-and-effect relationship (first cause-and-effect relationship) between a plurality of mechanisms 31 in a process carried out in production line 3 based on process data 220 and device setting position data 221 obtained by first obtaining unit 111.

Second relationship identifier 115 analyzes control program 222 obtained by second obtaining unit 112 and accordingly identifies a cause-and-effect relationship (second cause-and-effect relationship) between a plurality of mechanisms 31 based on control program 222.

Third relationship identifier 116 analyzes status data 223 obtained by third obtaining unit 113 and accordingly identifies a cause-and-effect relationship (third cause-and-effect relationship) between a plurality of mechanisms 31.

Abnormality detector 117 is used to detect any abnormality in the process carried out in production line 3. Specifically, an abnormality score is calculated to determine whether the calculated abnormality score is greater than a predefined threshold. Abnormality detector 117 confirms the occurrence of an abnormal event when the abnormality score is determined as exceeding the predefined threshold. In this example, the abnormality score refers to a degree of deviation from a normal range of scores.

Contribution ratio calculator 118 calculates, based on the abnormality score, the contribution ratio of a variable contributing to the abnormality score.

Estimator 119 obtains a plurality of cause-and-effect models from first to third relationship identifiers 114 to 116. Estimator 119 obtains the contribution ratio of a variable contributing to the abnormality score calculated by contribution ratio calculator 118. Estimator 119 estimates an abnormality causal factor in at least one of the plurality of cause-and-effect models based on information of the variable contribution ratio obtained earlier and then outputs the estimated factor to display 122. This may allow a user to readily identify a prospective abnormality causal factor(s) and to start a recovery work sooner.

Event-related matter registration unit 120 registers an event list for events. The event list contains pieces of information including; event outline, event data of a generated event, estimation result of estimator 119, confirmed event associated with the plurality of mechanisms, details of an event activity, and contribution ratio of the variable contributing to abnormality.

Event estimator 121 obtains an event list registered in event-related matter registration unit 120. Event estimator 121 obtains the contribution ratio of a variable contributing to the abnormality score calculated by contribution ratio calculator 118. Then, event estimator 121 extracts an event list with higher similarity between the contribution ratios and displays the event list on display 122. Thus, a user may readily identify any prospective event list when any abnormal event is detected and start a recovery work sooner.

The software modules of process analyzer 1 are described in detail later with reference to an operational example. This embodiment describes an example in which the software modules of process analyzer 1 are implemented by a general-purpose CPU. The software modules described so far may be implemented, in part or in whole, by one or a plurality of dedicated hardware processors.

<5.1 First cause-and-effect relationship>

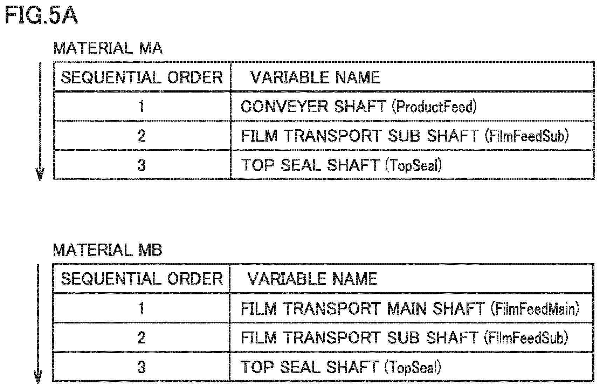

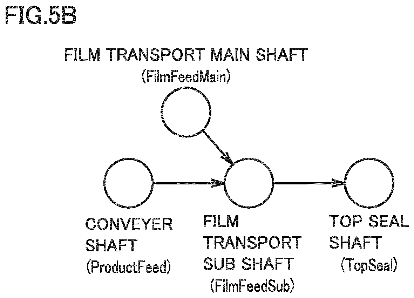

Figs. 5A and 5B are a view illustrating a process carried out by first relationship identifier 114 of process analyzer 1 according to the embodiment. The processing method hereinafter described is just an example and may be replaced with any other suitable method.

Fig. 5A is a table showing process data of materials MA and MB. In this table, the processing order of material MA and variable-related information of the mechanism(s) for material MA are set as the process data.

In the illustrated example, the following is set as the processing order of material MA; conveyer shaft (Product-Feed), film transport sub shaft (FilmFeedSub) and top seal shaft (TopSeal).

In this table, the processing order of material MB and variable-related information of the mechanism(s) for material MB are set as the process data.

In the illustrated example, the following is set the processing order of material MB; film transport main shaft (FilmFeedMain), film transport sub shaft (FilmFeedSub) and top seal shaft (TopSeal).

Fig. 5B is a view illustrating a cause-and-effect relationship for process based on the process data of materials MA and MB.

This figure illustrates nodes that respectively correspond to the conveyer shaft (ProductFeed), film transport sub shaft (FilmFeedSub), top seal shaft (TopSeal) and film transport main shaft (FilmFeedMain).

Then, a cause-and-effect relationship for design (cause-and-effect model for design) is generated, in which the following vectors are set; vector directed from the film transport main shaft (FilmFeedMain) to film transport sub shaft (FilmFeedSub), vector directed from the film transport sub shaft (FilmFeedSub) to top seal shaft (TopSeal), and vector directed from the conveyer shaft (ProductFeed) to film transport sub shaft (FilmFeedSub).

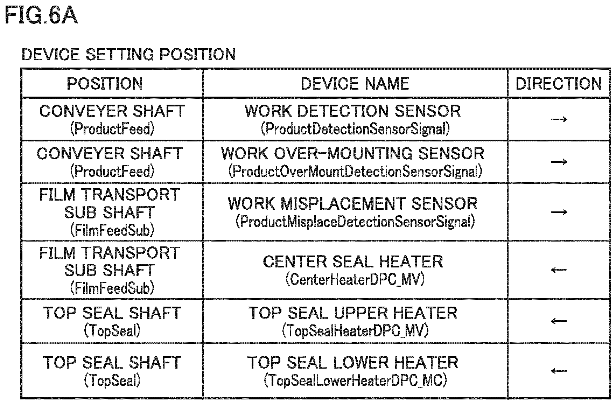

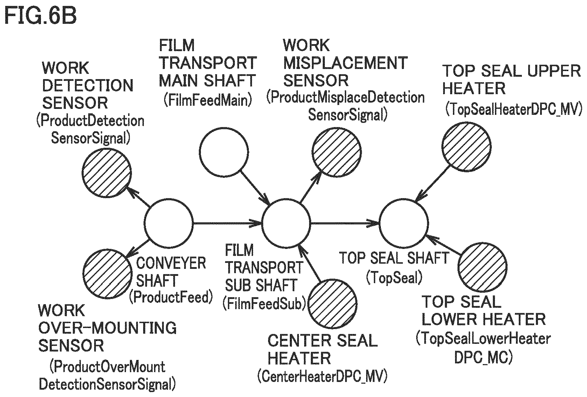

Figs. 6A and 6B are a view illustrating a process carried out by first relationship identifier 114 of process analyzer 1 according to the embodiment. The processing method hereinafter described is just an example and may be replaced with any other suitable method.

Fig. 6A is a table showing device setting position data. In this table, the device name, device position, and information of vector direction are set, as the device setting position data, in a manner that they are associated with one another.

In the illustrated table, the following is set as one example. The work detection sensor (ProductDetectionSensorSignal) and rightward vector-related information are set for the conveyer shaft (ProductFeed).

The work over-mounting sensor (ProductOverMountDetectionSensorSignal) and rightward vector-related information are set for the conveyer shaft (ProductFeed).

The work misplacement sensor (ProductMisplaceDetectionSensorSignal) and rightward vector-related information are set for the film transport sub shaft (FilmFeedSub).

The center seal heater (CenterHeaterDPC_MV) and leftward vector-related information are set for the film transport sub shaft (FilmFeedSub).

The top seal upper heater (TopSealHeaterDPU_MV) and leftward vector-related information are set for the top seal shaft (TopSeal).

The top seal lower heater (TopSealLowerHeaterDPC_MC) and leftward vector-related information are set for the top seal shaft (TopSeal).

Fig. 6B is a view illustrating a cause-and-effect relationship for design based on the device setting position data. With reference to Fig. 6B, a cause-and-effect relationship for process (cause-and-effect model for design) based on the device setting position data is generated correspondingly to the cause-and-effect relationship for design illustrated in Fig. 5B. Nodes are added based on the device setting position data in Fig. 5B, and a cause-and-effect model for design is generated that further includes a cause-and-effect relationship between these nodes.

Specifically, the following vectors are set; vector directed from the conveyer shaft (ProductFeed) to work detection sensor (ProductDetectionSensorSignal), vector directed from the conveyer shaft (ProductFeed) to work over-mounting sensor (ProductOverMountDetectionSensorSignal), vector directed from the film transport sub shaft (FilmFeedSub) to work misplacement sensor (ProductMisplaceDetectionSensorSignal), vector directed from the film transport sub shaft (FilmFeedSub) to work misplacement sensor (ProductMisplaceDetectionSensorSignal), vector directed from the center seal heater (CenterHeaterDPCMV) to film transport sub shaft (FilmFeedSub), vector directed from the top seal upper heater (TopSealHeaterDPU_MV) to top seal shaft (TopSeal), and vector directed from the top seal lower heater (TopSealLowerHeaterDPC_MC) to top seal shaft (TopSeal).

First relationship identifier 114 generates the cause-and-effect relationship for design thus characterized (cause-and-effect model for design) based on process data 220 and device setting position data 221.

<5.2 Second cause-and-effect relationship>

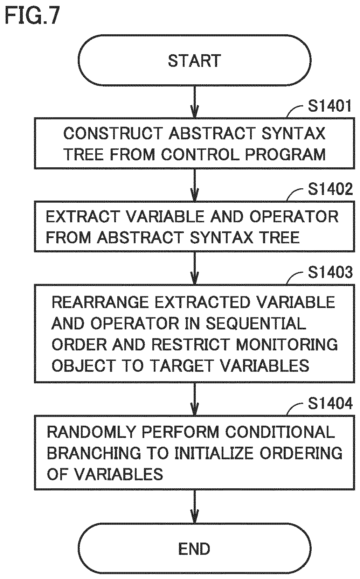

Fig. 7 is a flow chart of a process carried out by second relationship identifier 115 of process analyzer 1 according to the embodiment. The processing method hereinafter described is just an example and may be replaced with any other suitable method. An example is given below tor illustration purpose; production line 3 includes four mechanisms F1 to F4 as a plurality of mechanisms 31, and second relationship identifier 115 obtains control program 222 using variables v1 to v4 that respectively correspond to these four mechanisms F1 to F4.

Second relationship identifier 115, through syntactic analysis of control program 222 obtained earlier, constructs an abstract syntax tree from this control program 222 (step S1401). A known parsing technique; top-down parsing or bottom-up parsing, may be employed for construction of this abstract syntax tree. For instance, the construction of this abstract syntax tree may be assisted with a syntax analyzer adapted to handle a character string that conforms to a particular formal grammar. When the construction of the abstract syntax tree is completed, controller 11 proceeds to step S1402.

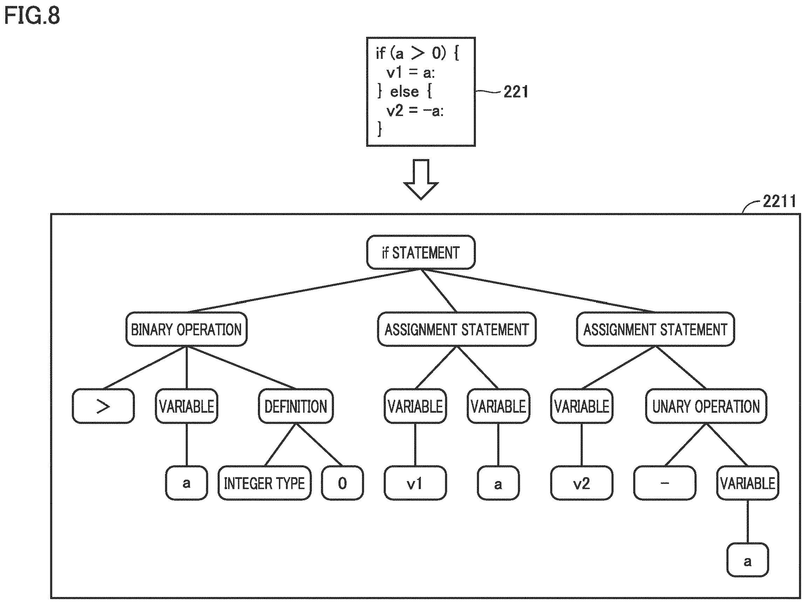

Fig. 8 is a conceptual diagram in which a program configuration according to the embodiment is expressed in a tree-like structure. Fig. 8 illustrates an abstract syntax tree 2211 obtained from a syntax, "if(a>0)[v1=a;]else[v2=-a;]" in control program 222. The abstract syntax tree refers to a data structure in which the control program is expressed in the form of a tree-like structure for interpretation of this program.

Specifically, second relationship identifier 115 extracts, from tokens used in the program, a token(s) relevant to the program interpretation, while skipping any other irrelevant token(s) like brackets. Then, second relationship identifier 115 associates an operator of, for example, conditional branching with a node and associates an operand, for example, variable with a leaf. Second relationship identifier 115 is allowed to construct the abstract syntax tree illustrated in Fig. 8 as a result of such syntactic analysis of control program 222. The abstract syntax tree thus structured expresses variables, operators and inter-node relations (operator-operand relationship). This abstract syntax tree may have some of its notations corrected, changed or deleted unless what is expressed on the whole is changed.

With reference to Fig. 7 again, second relationship identifier 115 extracts, from the abstract syntax tree constructed in step S1401, operators including assignment operators, conditional branches and variables (v1 - v4) associated with mechanisms 31 (step S1402). When, for example, abstract syntax tree 2211 illustrated in Fig. 8 is obtained, second relationship identifier 115 extracts, from this abstract syntax tree 2211, ["if", "v1", "=", "a", "v2" and "-a"]. After all of them are extracted, second relationship identifier 115 proceeds to the next processing step.

Second relationship identifier 115 arranges the variables and operators extracted in step S1402 in a sequential order and then restricts an object to be monitored for execution order to target portions associated with variables (v1 - v4) corresponding to mechanisms 31 targeted for the cause-and-effect relationship to be identified (step S1403). In the example above, second relationship identifier 115 further extracts ["if", "v1" and "v2"] from ["if", "v1", "=", "a", "v2", "=", and "-a"].

In next step S1404, second relationship identifier 115 randomly selects conditional branches for a trial run of control program 222 to initialize the sequential order of the variables subject to restriction (step S1403). Specifically, second relationship identifier 115 monitors, in the trial run of control program 222, in which the variables subject to restriction are used. Thus, the sequential order of the variables subject to restriction may be initialized.

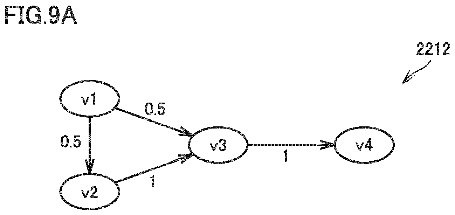

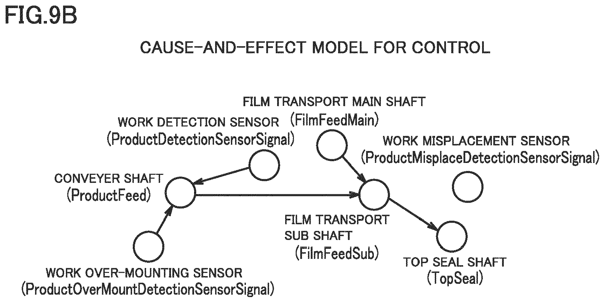

Figs. 9A and 9B are a view illustrating an exemplified cause-and-effect relationship for control according to the embodiment. Fig. 9A is a view illustrating an example of initialized control program 222 in which variables v1 to v4 corresponding to four mechanisms F1 to F4 are used.

A graph 2212 illustrated in Fig. 9A indicates the sequential order of 1) to 5) as the initialization result.

(1) Of variables "v1 to "v4", variable "v1" is first used.
(2) Subsequent to variable "v1", variable "v2" is used by the probability of 0.5, and variable "v3" is used by the probability of 0.5.
(3) Subsequent to variable "v2", variable "v3" is used by the probability of 1.
(4) Subsequent to variable "v3", variable "v4" is used by the probability of 1.
(5) Of variables "v1 to "v4", variable "v4" is first used.

Second relationship identifier 115, through the initialization process described above, is allowed to generate the cause-and-effect relationship for control based on the control program.

Fig. 9B is a view illustrating the cause-and-effect relationship for control based on control program 222 by second relationship identifier 115 in a production process of production line 3.

With reference to Fig. 9B, the following vectors are set as the cause-and-effect model for control based on the control program; vector directed from the work over-mounting sensor (ProductOverMountDetectionSensorSignal) to conveyer shaft (ProductFeed), vector directed from the work detection sensor (ProductDetectionSensorSignal) to conveyer shaft (ProductFeed), vector directed from the film transport main shaft (FilmFeedMain) to film transport sub shaft (FilmFeedSub), vector directed from the film transport sub shaft (FilmFeedSub) to top seal shaft (TopSeal), and vector directed from the conveyer shaft (ProductFeed) to film transport sub shaft (FilmFeedSub).

<5.3 Third cause-and-effect relationship>

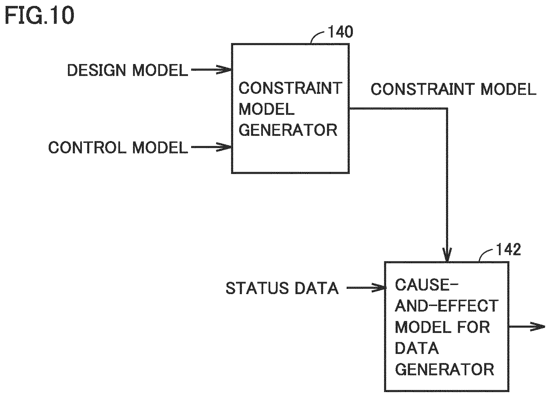

Fig. 10 is a block diagram that illustrates a process carried out by third relationship identifier 116 of process analyzer 1 according to the embodiment. The processing method hereinafter described is just an example and may be replaced with any other suitable method.

With reference to Fig. 10, third relationship identifier 116 includes a constraint model generator 140 and a cause-and-effect model for data generator 142.

Constraint model generator 140 generates a constraint model in which the cause-and-effect model for design and the cause-and-effect model for control are combined.

Cause-and-effect model for data generator 142 generates a cause-and-effect model for data based on the constraint model and status data.

The process to generate the cause-and-effect model for data is hereinafter described.

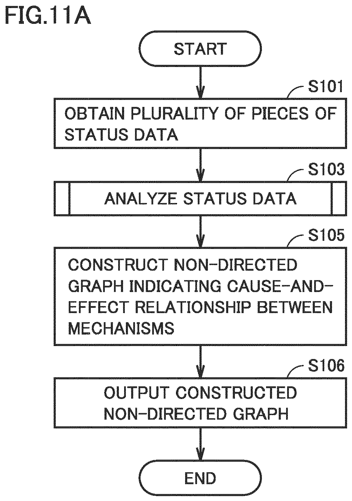

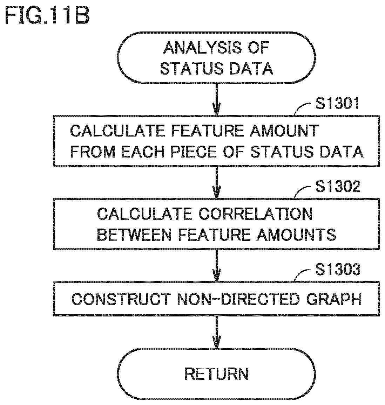

Figs. 11A and 11B are a flow chart of a process carried out by cause-and-effect model for data generator 142 according to the embodiment.

An example is given below for illustration purpose, production line 3 includes four mechanisms F1 to F4 as a plurality of mechanisms 31.

With reference to Fig. 11A, cause-and-effect model for data generator 142 obtains status data 223 of mechanisms F1 to F4 (step S101).

Next, cause-and-effect model for data generator 142 analyzes the obtained status data (step S103).

Fig. 11B is a sub routine flow chart that illustrates a process to analyze the status data.

With reference to Fig. 11B, cause-and-effect model for data generator 142 calculates a feature amount 2221 from each piece of status data 223 obtained in step S101 (step S1301). Feature amount 2221 is not necessarily limited to any particular type and may be suitably selected depending on what is required of the embodiment. Feature amount 2221 may be calculated in any manner suitable for the embodiment. In this embodiment, cause-and-effect model for data generator 142 calculates feature amount 2221 from status data 223 as follows. First, cause-and-effect model for data generator 142 divides each piece of status data 223 obtained earlier per frame in order to define a processing range used to calculate feature amount 2221. The length of each frame may be set to a dimension suitable for the embodiment.

Cause-and-effect model for data generator 142 may divide each piece of status data 223 for each frame having a certain length of time. Production line 3 is not always operated at regular time intervals. Dividing each piece of status data 223 for each frame having a certain length of time, therefore, involves the risk of a time lag between steps of the operation of mechanism 31 reflected in the frames.

Cause-and-effect model for data generator 142 may divide status data 223 into frames per takt time. The takt time is an amount of time required for production line 3 to produce a predefined number of products. The takt time may be specified based on signals used to control production line 3, for example, control signals used for PLC 2 to control the operation of each mechanism 31 in production line 3.

Cause-and-effect model for data generator 142 calculates the value of feature amount 2221 from each frame of status data 223. In case status data 223 is continuous-valued data like measurement data, cause-and-effect model for data generator 142 may calculate, as feature amount 2221, intra-frame amplitude, largest value, smallest value, average value, discrete value, standard deviation, and/or instantaneous value (one-point sample). In case status data 223 is discrete-valued data like detection data, controller 11 may calculate, as feature amount 2221, "on" time, "off" time, duty ratio, number of times of "on", or "number of times of "off" in each frame. After each feature amount 2221 is calculated, cause-and-effect model for data generator 142 may proceed to next step S1302.

Next, cause-and-effect model for data generator 142 calculates a correlation coefficient or a partial correlation coefficient between feature amounts 2221 (step S1302). The correlation coefficient may be calculated by the following Formula 1. The partial correlation coefficient may be calculated by the following Formula 2.

[Mathematical Formula 1]

$$r_{ij} = \frac{\sum_{k=1}^{n}(x_i(k) - X_i)(x_j(k) - X_j)}{\sqrt{\left(\sum_{k=1}^{n}(x_i(k) - X_i)^2\right)\left(\sum_{k=1}^{n}\left(x_j(k) - X_j\right)^2\right)}}$$

In this formula, "$r_{ij}$" represents an element in the ith row and jth column of a matrix 2222, "$x_i$" and "$x_j$" each correspond to data indicating feature amount 2221 calculated from each piece of status data 223, "$X_i$" and "$X_j$" respectively represent sample averages of $x_i$ and $x_j$, and "n" represents the number of each feature amount 2221 used to calculate correlations.

[Mathematical Formula 2]

$$r_{ij\cdot rest} = \frac{-r^{ij}}{\sqrt{r^{ii}r^{jj}}}$$

In this formula, "$R^{-1}(r^{ij})$" expresses the inverse matrix of matrix "$R(r_{ij})$", and "$r^{ij}$" indicates an ith row and jth column in the inverse matrix of matrix 2222.

Thus, cause-and-effect model for data generator 142 is allowed to obtain matrix 2222 in which the correlation coefficient and partial correlation coefficient represent each element. The correlation coefficient and partial correlation coefficient between feature amounts 2221 indicate the strength of a relationship between corresponding ones of mechanisms 31. Thus, each element of matrix 2222 determines the strength of a relationship between corresponding ones of mechanisms 31. After the correlation coefficient or partial correlation coefficient between feature amounts 2221 is calculated, cause-and-effect model for data generator 142 may proceed to next step S1303.

Cause-and-effect model for data generator 142 constructs non-directed graph information 2223 indicating the strength of a relationship between corresponding ones of mechanisms 31 based on the correlation coefficient or partial correlation coefficient between feature amounts 2221 (step S1303).

For example, cause-and-effect model for data generator 142 generates a node corresponding to each mechanism 31. When the correlation coefficient or partial correlation coefficient calculated between two mechanisms 31 has a value greater than or equal to a threshold, controller 11 couples the relevant nodes. When the correlation coefficient or partial correlation coefficient calculated between two mechanisms 31 has a value less than the threshold, controller 11 does not couple the relevant nodes. The threshold may be a fixed value defined in process analysis program 17 or a value optionally changeable by an operator. The edge width may be decided correspondingly to the magnitude of a value of the relevant correlation coefficient value or partial correlation coefficient. After step S103 described above, a directed graph showing a cause-and-effect relationship between a plurality of mechanisms is constructed (step S105), and the constructed directed graph is output (step S106).

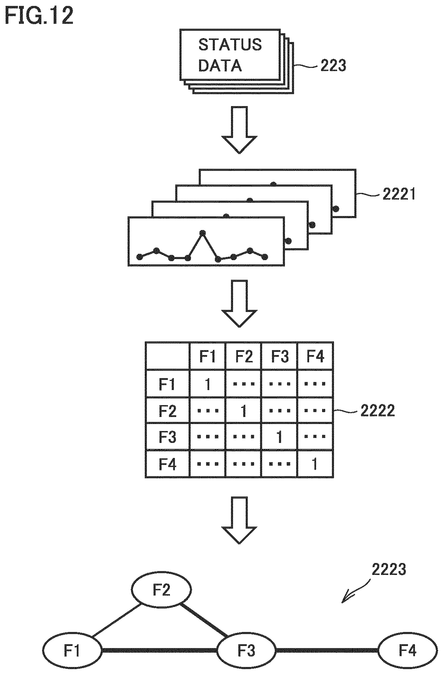

Fig. 12 is a view illustrating a process to generate non-directed graph information based on status data according to the embodiment. The process illustrated in Fig. 12 allows non-directed graph information 2223 to be generated. This figure illustrates an example in which four nodes are generated correspondingly to four mechanisms F1 to F4. An edge is formed between nodes of mechanisms F1 and F2, between nodes of mechanisms F1 and F3, between nodes of mechanisms F2 and F3, and between nodes of mechanisms F3 and F4. Because of greater correlations between mechanisms F1 and F3 and between mechanisms F3 and F4 than between the other mechanisms, inter-node edges of mechanisms F1 and F3 and of mechanisms F3 and F4 are greater than any other edges. After non-directed graph information 2223 indicating the strength of a relationship between the plurality of mechanisms 31 is thus successfully constructed, the process to analyze status data 223 according to this embodiment is over.

In the example of Fig. 12, non-directed graph information 2223 expresses a non-directed graph thus formed using an image. The output format of non-directed graph information 2223 is not necessarily limited to images but may be, for example, texts. In the example described above, the correlation coefficient or partial correlation coefficient is compared to the threshold to avoid the formation of an edge between weakly related nodes (mechanisms 31). This is, however, just an example of the removal of an edge between weakly related nodes. For example, after a graph is drawn up in which all of nodes are coupled with edges, cause-and-effect model for data generator 142 may delete edges from the graph in the order of a smaller edge of the correlation coefficient or partial correlation coefficient, so that a fit index indicating a degree of deviation (for, example, GFI, SRMR) does not exceed a threshold.

Cause-and-effect model for data generator 142 adds directionality to the non-directed graph information using the constraint model information to identify the order relation of the plurality of mechanisms 31 in production line 3.

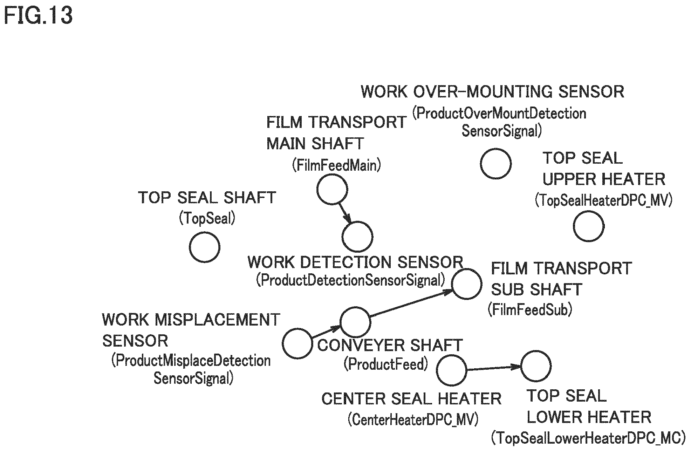

Fig. 13 is a view illustrating a cause-and-effect relationship for control based on status data 223 by third relationship identifier 116 in a production process of production line 3 according to the embodiment.

Referring to Fig. 13, this example shows an example of the generated cause-and-effect model for data.

The following vectors are set; vector directed from the work misplacement sensor (ProductMisplaceDetectionSensorSignal) to conveyer shaft (ProductFeed), vector directed from the conveyer shaft (ProductFeed) to film transport sub shaft (FilmFeedSub), vector directed from the film transport main shaft (FilmFeedMain) to work detection sensor (ProductDetectionSensorSignal), and vector directed from the center seal heater (CenterHeaterDPC_MV) to top seal lower heater (TopSealLowerHeaterDPC_MC).

<6. Abnormality detection>

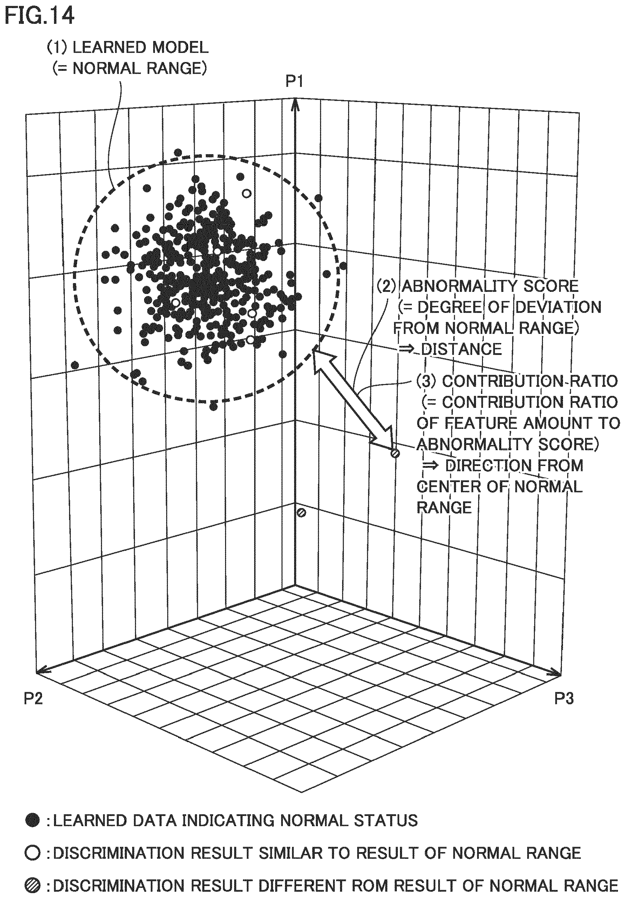

Fig. 14 is a view illustrating abnormality detection by abnormality detector 117 according to the embodiment.

Referring to Fig. 14, abnormality detector 117 detects an abnormal event based on the status data. In the illustrated example, data of three variables P1 to P3 is described as an example of the status data.

As for variables P1 to P3, a three-dimensional space with three axes is set. This figure further shows, as learned models, a data group indicative of a normal range and data indicative of an abnormal status. Point group data with black dots represents a data group indicative of a normal range. On the other hand, hatched data represents data beyond the normal range. The abnormality score refers to a distance from the center point of the normal range data group. The abnormality score has a higher value with greater distance from the center point.

While this example describes a three-dimensional space with three variables P1 to P3, the present disclosure is naturally applicable to a multi-dimensional space depending on the number of variables. The contribution ratio of a variable may be calculated in accordance with a direction, as well as the distance, from the center of the normal range toward the data. A greater amount of displacement from an axis corresponding to variable P3, for instance, may result in a greater contribution ratio of this variable P3. The contribution ratio of a variable to abnormality may be calculated otherwise. For example, the importance of a decision tree (or random forest) may be used for the calculation.

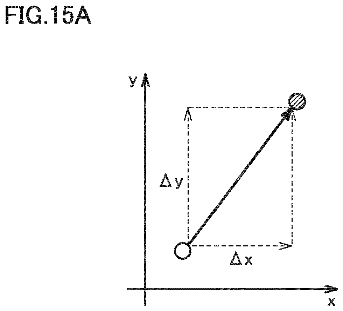

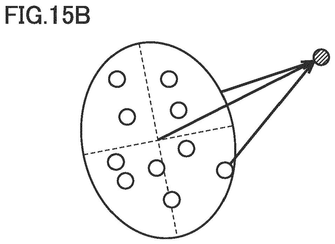

Figs. 15A and 15B are a view illustrating abnormality detection by abnormality detector 117 according to the embodiment.

Fig. 15A illustrates data change from a point to another point. This example presents a two-dimensional data change, with a change by $\Delta x$ to x axis and a change by $\Delta y$ to y axis. In the case of a two-dimensional data change, distance changes by $\Delta x$ and $\Delta y$ are calculated as the abnormality score.

Fig. 15B illustrates a distribution-to-point data change. In the case of a three-dimensional data change, a distance change from a distribution center to a point is calculated as the abnormality score.

The algorithms available for the abnormality score calculation may include abnormality detection based on the Mahalanobis' distance, and abnormality detection algorithms like LOF (Local Outlier Factor) and IsolationForest.

<7. Estimating abnormality causal factor>

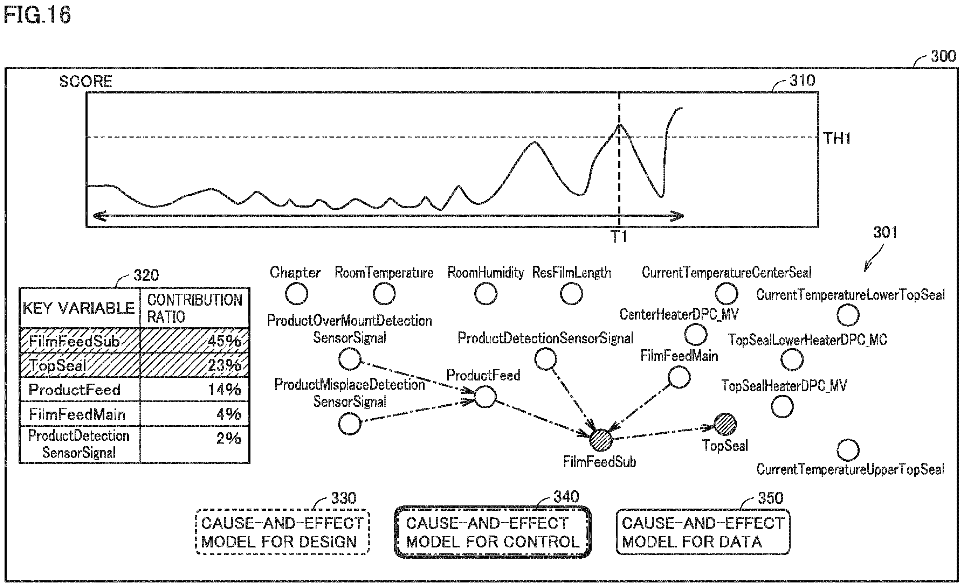

Fig. 16 is a view illustrating estimation of an abnormality causal factor by estimator 119 according to the embodiment.

In Fig. 16 is illustrated an estimation result screen 300 estimated by estimator 119 and displayed on display 122.

Estimation result screen 300 shows score data 310, variables contributing to abnormality score, contribution ratio data 320 and cause-and-effect models 301.

Estimation result screen 300 is further provided with the following buttons; button 330 for selection of a cause-and-effect model for design that can receive a user's input, button 340 for selection of a cause-and-effect model for control, and button 350 for selection of a cause-and-effect model for data.

Estimator 119 is allowed to selectively output an estimation result depending on a user's input.

This figure illustrates an example in which button 340 for selection of a cause-and-effect model for control has been clicked by a user.

Score data 310 indicates a score value that changes with a time axis. In the illustrated example, the score value is greater than a threshold TH1 at time T1.

Abnormality detector 117 detects that an abnormal event occurred when the score value is determined as exceeding threshold TH1 at time T1. Contribution ratio calculator 118 calculates a variable contribution ratio based on the score value at time T1.

For example, contribution ratio calculator 118 outputs contribution ratio data 320. In the illustrated example, contribution ratio data 320 exhibits the following data; film transport sub shaft (FilmFeedSub) with the contribution ratio of 45%, top seal shaft (TopSeal) with the contribution ratio of 23%, conveyer shaft (ProductFeed) with the contribution ratio of 14%, film transport main shaft (FilmFeedMain) with the contribution ratio of 4%, and work detection sensor (ProductDetectionSensorSignal) with the contribution ratio of 2%.

Of the variable contribution ratios calculated earlier, estimator 119 extracts variables with the highest and the second highest contribution ratios. In the illustrated example, the film transport sub shaft (FilmFeedSub) and top seal shaft (TopSeal) are extracted.

In this example, button 340 for the cause-and-effect model for control has been selected. Estimator 119 identifies nodes of the film transport sub shaft (FilmFeedSub) and top seal shaft (TopSeal) in the cause-and-effect model for control.

Estimator 119 extracts nodes connected to the identified nodes in the selected cause-and-effect model for control.

Estimator 119 extracts the node of the conveyer shaft (ProductFeed) connected to the film transport sub shaft (FilmFeedSub). Then, estimator 119 extracts, as the nodes connected to the conveyer shaft (ProductFeed); node of the work over-mounting sensor (ProductOverMountDetectionSensorSignal), and node of the work misplacement sensor (ProductMisplaceDetectionSensorSignal).

Also, estimator 119 extracts, as the nodes connected to the film transport sub shaft (FilmFeedSub); node of the work detection sensor (ProductDetectionSensorSignal), and node of the film transport main shaft (FilmFeedMain).

Further, estimator 119 extracts the node of the film transport sub shaft (FilmFeedSub) as the node connected to the top seal shaft (TopSeal).

Thus, the inter-node relationship in the cause-and-effect model for control may be readily identified, which may allow an abnormality causal factor to be easily estimated.

In the description above, the abnormality detection is confirmed when the score value of score data 310 is greater than threshold TH1 at time T1. After the confirmation, the variable contribution ratio at time T1 is then calculated.

An optional time point may be selected and set by a user as time T1. A user may, for example, set an optional time point using a pointing device and obtains the score value at the set time point. The variable contribution ratio may be displayed after the output of contribution ratio data 320 based on the obtained score value. The variables with the highest and the second highest contribution ratios may be extracted from contribution ratio data 320 to estimate and display a cause-and-effect model selected as described earlier.

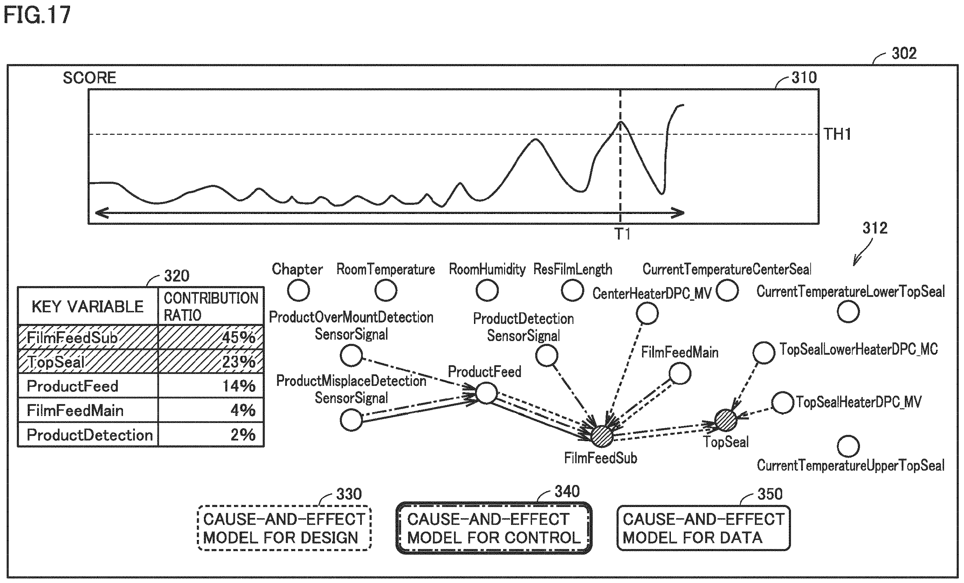

Fig. 17 is a view illustrating estimation of an abnormality causal factor by estimator 119 according to the embodiment.

In Fig. 17 is illustrated an estimation result screen 302 showing a result estimated by estimator 119 and displayed on display 122.

In estimation result screen 302, unlike estimation result screen 300, all of the following buttons that can receive a user's input have been selected; button 330 for selection of a cause-and-effect model for design, button 340 for selection of a cause-and-effect model for control, and button 350 for selection of a cause-and-effect model for data.

Estimation result screen 302 shows a cause-and-effect model 312 as a result of this selection. Any other aspects are similar to what was described earlier, detailed description of which will not be repeated.

Estimator 119 identifies nodes of the film transport sub shaft (FilmFeedSub) and top seal shaft (TopSeal) in the cause-and-effect model for design, cause-and-effect model for control, and cause-and-effect model for data.

Estimator 119 extracts the nodes connected to the nodes identified in the selected cause-and-effect model for design.

Also, estimator 119 extracts the following nodes connected to the film transport sub shaft (FilmFeedSub); conveyer shaft (ProductFeed), center seal heater (CenterHeaterDPC_MV) and film transport main shaft (FilmFeedMain).

Further, estimator 119 extracts, as the nodes connected to the top seal shaft (TopSeal); film transport sub shaft (FilmFeedSub), top seal lower heater (TopSealLowerHeaterDPC_MC), and top seal upper heater (TopSealHeaterDPU_MV).

Estimator 119 extracts the nodes connected to the nodes identified in the selected cause-and-effect model for control.

Estimator 119 extracts the node of the conveyer shaft (ProductFeed) connected to the film transport sub shaft (FilmFeedSub). Then, estimator 119 extracts, as the nodes connected to the conveyer shaft (ProductFeed); node of the work over-mounting sensor (ProductOverMountDetectionSensorSignal), and node of the work misplacement sensor (ProductMisplaceDetectionSensorSignal).

Also, estimator 119 extracts, as the nodes connected to the film transport sub shaft (FilmFeedSub); node of the work detection sensor (ProductDetectionSensorSignal), and node of the film transport main shaft (FilmFeedMain).

Further, estimator 119 extracts the node of the film transport sub shaft (FilmFeedSub) as the node connected to the top seal shaft (TopSeal).

Estimator 119 extracts nodes connected to the nodes identified in the selected cause-and-effect model for data.

Estimator 119 extracts the node of the conveyer shaft (ProductFeed) connected to the film transport sub shaft (FilmFeedSub). Then, the node of the work misplacement sensor (ProductMisplaceDetectionSensorSignal) is extracted as the node connected to the conveyer shaft (ProductFeed).

Thus, the inter-node relationships in the cause-and-effect model for control, cause-and-effect model for data and cause-and-effect model for design may be readily identified, which may allow an abnormality causal factor to be easily estimated.

As for the combined display of different cause-and-effect models described in this example, how to combine these models may be optionally decided.

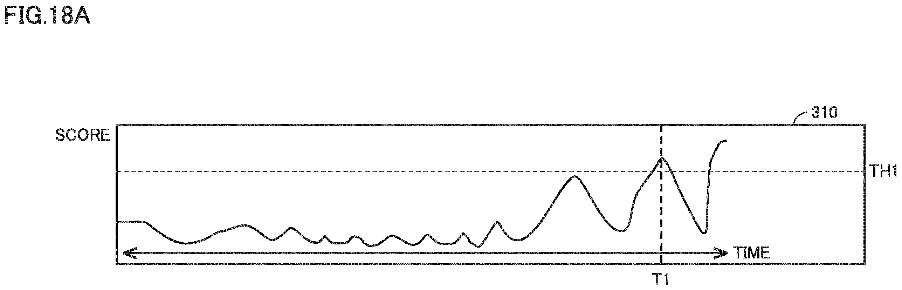

Figs. 18A to 18C are a view illustrating estimation of an abnormality causal factor by estimator 119 according to the embodiment.

Fig. 18A illustrates score data 310 described with reference to Fig. 14. The illustrated example calculates the variable contribution ratio when the score value at time T1 is greater than a threshold TH1.

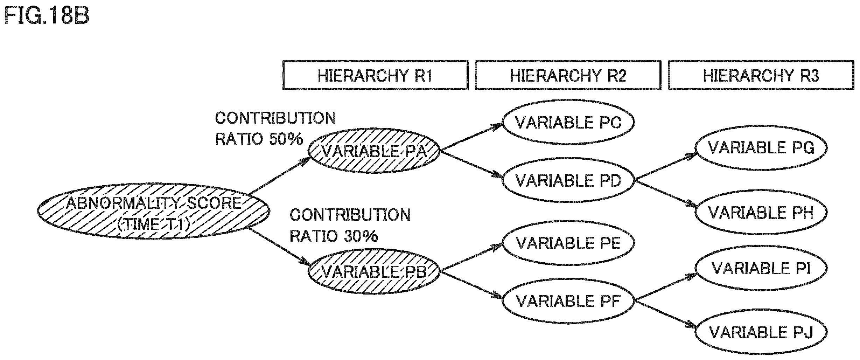

Fig. 18B is a relationship diagram of transition for estimation of an abnormality causal factor.

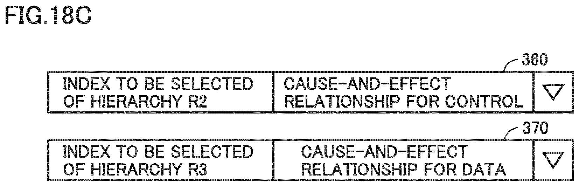

Fig. 18C shows buttons 360 and 370 optionally settable on the estimation result screen that can receive a user's input. Button 360 is used to set an index to be selected of a hierarchy R2, and button 370 is used to set an index to be selected of a hierarchy R3.

In the illustrated example, one of the cause-and-effect relationship for design, cause-and-effect relationship for control and cause-and-effect relationship for data is selectable as the hierarchical index.

In the illustrated example, the cause-and-effect relationship for control is selected as the index to be selected of hierarchy R2, and the cause-and-effect relationship for data is selected as the index to be selected of hierarchy R3.

Fig. 18B illustrates an example in which variables PA and PB with high contribution ratios correspondingly to the score values are identified in hierarchy R1. In hierarchy R2, variables connected to variables PA and PB are extracted with reference to the cause-and-effect model for control in response to an input through button 360 for index setting of hierarchy R2.

In the illustrated example, variable PA is connected to variable PC and variable PD with reference to the cause-and-effect model for control.

Also, variable PB is connected to variable PE and variable PF with reference to the cause-and-effect model for control.

In hierarchy R3, variables connected to variables PC to PF are extracted with reference to the cause-and-effect model for data in response to an input through button 370 for index setting of hierarchy R3.

In this example, variables PG and PH are extracted as the variables connected to variable PD. In this example, variables PI and PJ are extracted as the variables connected to variable PF.

Thus, a user may be allowed to change the relationship diagram of transition referring to an optional transition-related model. This may allow the user to easily know the inter-node relationship, facilitating the process to estimate an abnormality causal factor.

In the description above, the cause-and-effect relationship for control is selected for index setting of hierarchy R2, and the cause-and-effect relationship for data is selected for index setting of hierarchy R3. Any other suitable cause-and-effect relationship may be used instead of the ones described in this example.

<8. Event List>

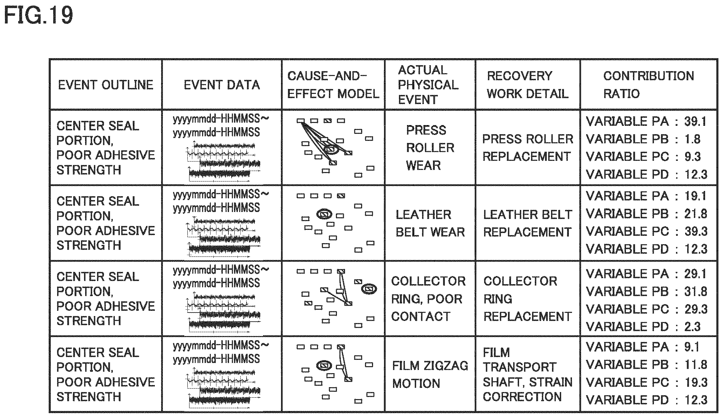

Fig. 19 is a table showing an event list generated by event-related matter registration unit 120 according to the invention. Fig. 19 shows an event list in which a plurality of events are registered by a user.

Specifically, event-related matter registration unit 120 contains, as the event list, pieces of information including event outline, event data, cause-and-effect models, actual physical events and recovery work detail. The event list further contains data including variables and contribution ratios calculated by contribution ratio calculator 118.

Referring to the event outline, the event data and cause-and-effect model are registered for "poor sealing adhesive strength", the "press roller wear" is registered for actual physical event, and the "press roller replacement" is registered for recovery work detail. The contribution ratios of variables PA to PD registered in this table are respectively "39.1", "1.8", "9.3", and "12.3".

Referring to the event outline, the event data and cause-and-effect model are registered for "poor sealing adhesive strength", "leather belt wear" is registered for actual physical event, and the "leather belt wear" is registered for recovery work detail. The following contribution ratios of variables PA to PD are also registered in this table; "19.1", "21.8", "39.3", and "12.3".

Referring to the event outline, the event data and cause-and-effect model are registered for "poor sealing adhesive strength", the "collector ring poor contact" is registered for actual physical event, and "collector ring replacement" is registered for recovery work detail. The following contribution ratios of variables PA to PD are registered in this table; "29.1", "31.8", "29.3", and "2.3".

Referring to the event outline, the event data and cause-and-effect model are registered for "poor sealing adhesive strength", the "film zigzag motion" is registered for actual physical event, and the "film transport shaft - strain correction" is registered for recovery work detail. The following contribution ratios of variables PA to PD are registered in this table; "9.1", "11.8", "19.3", and "12.3".

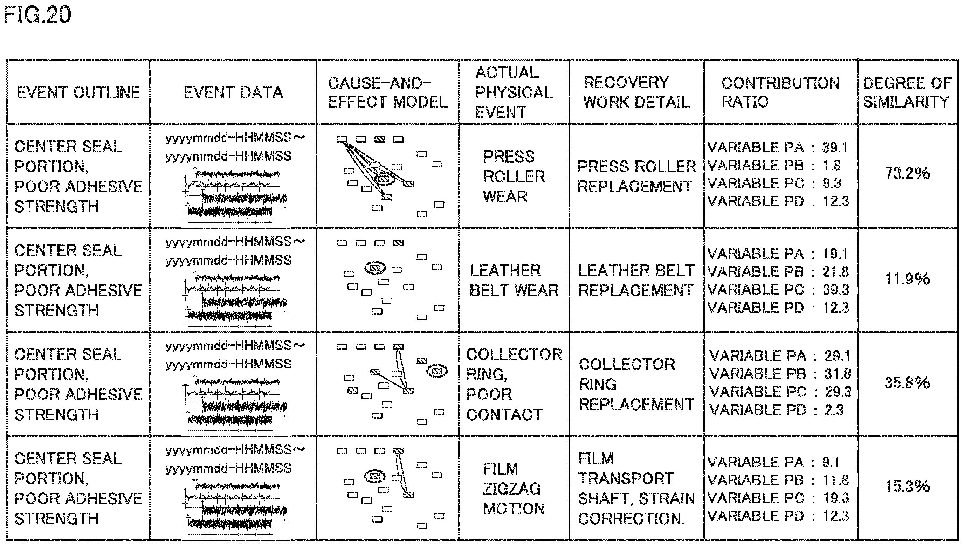

Fig. 20 is a table that illustrates an event estimation process using the event list by event estimator 121 according to the invention.

With reference to Fig. 20, event estimator 121 estimates an event using the event list registered in event-related matter registration unit 120.

Specifically, event estimator 121 obtains the event data and calculates a degree of similarity between contribution ratios.

In one example, the following cosine similarity, $S_{ij}$, defined in the following equation may be used.

[Mathematical Formula 3]

$$S_{ij} = \frac{t_{\vec{x}_i} * \vec{x}_j}{\sqrt{t_{\vec{x}_i} * \vec{x}_i} * \sqrt{t_{\vec{x}_j} * \vec{x}_i}} = \frac{\sum_{k=1}^{m} x_{ki} x_{kj}}{\sqrt{\sum_{k=1}^{m} x_{ki}^2 \sum_{k=1}^{m} x_{kj}^2}}$$

In this formula, $x_i$: is a contribution ratio of each variable in the event data list, and $x_j$ is a contribution ratio of each variable calculated by contribution ratio calculator 118.

According to the invention, event estimator 121 extracts an event list with higher similarity between the contribution ratios. This presents the extraction of an uppermost event list with a high degree of similarity.

Specifically, the following items are registered in this event list; "poor sealing adhesive strength" for event outline, cause-and-effect model, "press roller wear" for actual physical event, and "press roller replacement" for recovery work detail.

Based on the content of this table, the estimated abnormality and recovery work detail, which are respectively "press roller wear" and press roller replacement, are presented. Thus, the recovery work may be carried out sooner to deal with the event.

Event estimator 121 may present, to a user, all of the items of event data when the degree of similarity is greater than or equal to a predefined value.

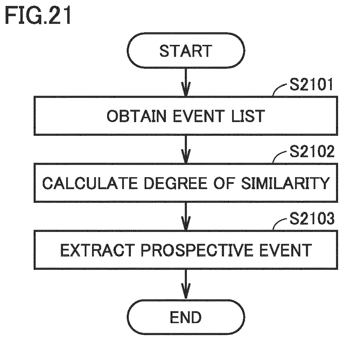

Fig. 21 is a flow chart of the event estimation process using the event list by event estimator 121 according to the embodiment. With reference to Fig. 21, event estimator 121 obtains the event list (step S101). Specifically, event estimator 121 obtains the event list registered in event-related matter registration unit 120 described with reference to Fig. 20.

Next, event estimator 121 calculates the degree of similarity between the variable contribution ratio included in the obtained event list and the variable contribution ratios calculated by contribution ratio calculator 118 (step S102). Specifically, event estimator 121 calculates the cosine similarity $S_{ij}$ between the variable contribution ratios included in the obtained event list and the variable contribution ratios calculated by contribution ratio calculator 118.

Then, event estimator 121 extracts a prospective event list based on the calculated degree of similarity (step S103).

Then, event estimator 121 ends the process (End). This process may facilitate the event list extraction and allow the recovery work to start sooner.

Although the present invention has been described and illustrated in detail, it is clearly understood that the same is by way of illustration and example only and is not to be taken by way of limitation, the scope of the present invention being interpreted by the terms of the appended claims.

**Claims**

1. An information processing device, comprising:

a cause-and-effect model generator (114 to 116) configured to generate a plurality of cause-and-effect models between variables based on a relationship between a plurality of mechanisms in a production process of a production line, a dependency between a plurality of events associated with the plurality of mechanisms, or a control-based relationship between the plurality of mechanisms;
an abnormality detector (117) configured to obtain a result of abnormality detection in the production line;
a contribution ratio calculator (118) configured to calculate a contribution ratio of each variable of a plurality of variables contributing to abnormality in the result of abnormality detection; and
an estimator (119) configured to estimate an abnormality causal factor for at least one of the plurality of cause-and-effect models based on the calculated contribution ratios of the variables contributing to abnormality;
**characterized in that**:

the information processing device further comprises a display (122) configured to display the abnormality causal factor estimated for the at least one of the plurality of cause-and-effect models based on a result of estimation obtained by the estimator;

wherein the information processing device further comprises an event-related matter registration unit (120) configured to register an event list for an abnormal event;

wherein the event list includes pieces of information including: an event outline, event data of a generated event, the estimation result of the estimator, a confirmed event associated with the plurality of mechanisms, details of an event activity, and the contribution ratios of variables contributing to abnormality for said abnormal event;

wherein the information processing device further comprises an event estimator (121) configured to calculate a degree of similarity between the contribution ratios included in the event list and the calculated contribution ratios of the variables contributing to abnormality; and

wherein the event estimator is configured to extract an event list with higher similarity between the contribution ratios and display the event list on the display.

2. The information processing device according to claim 1, further comprising a receiver (330 to 350) configured to receive an input from a user of a selected one of the plurality of cause-and-effect models,

wherein the display is configured to display the abnormality causal factor estimated for the selected one of the plurality of cause-and-effect models based on the result of estimation obtained by the estimator in response to reception of the input of the selected one of the plurality of cause-and-effect models by the receiver.

3. An information processing method, comprising:

generating a plurality of cause-and-effect models between variables based on a relationship between a plurality of mechanisms in a production process of a production line, a dependency between a plurality of events associated with the plurality of mechanisms, or a control-based relationship between the plurality of mechanisms;

obtaining a result of abnormality detection in the production line;

calculating a contribution ratio of each variable of a plurality of variables contributing to abnormality in the result of abnormality detection; and

estimating an abnormality causal factor for at least one of the plurality of cause-and-effect models based on the calculated contribution ratios of the variables contributing to abnormality;

**characterized in that** the method further comprises:

displaying the abnormality causal factor estimated for the at least one of the plurality of cause-and-effect models;

registering an event list for an abnormal event, the event list including pieces of information including: an event outline, event data of a generated event, the estimated abnormality causal factor, a confirmed event associated with the plurality of mechanisms, details of an event activity, and the contribution ratios of variables contributing to abnormality for said abnormal event;

calculating a degree of similarity between the contribution ratios included in the registered event list and the calculated contribution ratios of the variables contributing to abnormality; and

extracting an event list with higher similarity between the contribution ratios and displaying the event list.

4. An information processing program that causes a computer to execute:

generating a plurality of cause-and-effect models between variables based on a relationship between a plurality of mechanisms in a production process of a production line, a dependency between a plurality of events associated with the plurality of mechanisms, or a control-based relationship between the plurality of mechanisms;

obtaining a result of abnormality detection in the production line;

calculating a contribution ratio of each variable of a plurality of variables contributing to abnormality in the result of abnormality detection; and

estimating an abnormality causal factor for at least one of the plurality of cause-and-effect models based on the contribution ratios of the variables contributing to abnormality;

**characterized in that** the information processing program further causes the computer to execute:

displaying the abnormality causal factor estimated for the at least one of the plurality of cause-and-effect models;

registering an event list for an abnormal event, the event list including pieces of information including: an event outline, event data of a generated event, the estimated abnormality causal factor, a confirmed event associated with the plurality of mechanisms, details of an event activity, and the contribution ratios of variables contributing to abnormality for said abnormal event;

calculating a degree of similarity between the contribution ratios included in the registered event list and the calculated contribution ratios of the variables contributing to abnormality; and

extracting an event list with higher similarity between the contribution ratios and displaying the event list.

**Patentansprüche**

1. Informationsverarbeitungsvorrichtung, umfassend:

ein Ursache-und-Wirkungs-Modell-Generator (114 bis 116), der konfiguriert ist, um eine Vielzahl von Ursache-und-Wirkungs-Modellen zwischen Variablen beruhend auf einer Beziehung zwischen einer Vielzahl von Mechanismen in einem Fertigungsprozess einer Fertigungslinie, einer Abhängigkeit zwischen einer Vielzahl von Ereignissen, die der Vielzahl von Mechanismen zugeordnet sind, oder einer steuerungsbasierten Beziehung zwischen der Vielzahl von Mechanismen zu erzeugen;

einen Anomaliedetektor (117), der konfiguriert ist, um ein Ergebnis einer Anomaliedetektion in der Fertigungslinie zu erhalten;

ein Beitragsverhältnisberechnungselement (118), das konfiguriert ist, um ein Beitragsverhältnis jeder Variable aus einer Vielzahl von Variablen, die zu einer Anomalie im Ergebnis der Anomaliedetektion beitragen, zu berechnen; und

eine Schätzeinheit (119), die konfiguriert ist, einen Anomaliekausalfaktor für zumindest eines aus der Vielzahl von Ursache-und-Wirkungs-Modellen beruhend auf den berechneten Beitragsverhältnissen der zur Anomalie beitragenden Variablen zu schätzen:

**dadurch gekennzeichnet, dass**:

die Informationsverarbeitungsvorrichtung ferner eine Anzeige (122) umfasst, die konfiguriert ist, um den Anomaliekausalfaktor, der für das zumindest eine aus der Vielzahl von Ursache-und-Wirkungs-Modellen geschätzt wurde, beruhend auf einem Ergebnis einer von der Schätzeinheit erhaltenen Schätzung anzuzeigen;

wobei die Informationsverarbeitungsvorrichtung ferner eine Ereignisbezogene-Angelegenheit-Registrierungseinheit (120) umfasst, die konfiguriert ist, um eine Ereignisliste für ein abnormales Ereignis zu registrieren;

wobei die Ereignisliste Informationenselemente umfasst, einschließlich: eine Ereignisgliederung, Ereignisdaten eines erzeugten Ereignisses, das Schätzergebnis der Schätzeinheit, ein bestätigtes Ereignis, das der Vielzahl von Mechanismen zugeordnet ist, Details einer Ereignisaktivität und die Beitragsverhältnisse von Variablen, die zur Anomalie für das abnormale Ereignis beitragen;

wobei die Informationsverarbeitungseinheit ferner eine Ereignisschätzeinheit (121) umfasst, die konfiguriert ist, um ein Ausmaß an Ähnlichkeit zwischen den in der Ereignisliste enthaltenen Beitragsverhältnissen und den berechneten Beitragsverhältnissen der Anomalie beitragenden Variablen zu berechnen; und

wobei die Ereignisschätzeinheit konfiguriert ist, um eine Ereignisliste mit größerer Ähnlichkeit zwischen den Beitragsverhältnissen zu extrahieren und die Ereignisliste auf der Anzeige anzuzeigen.

2. Informationsverarbeitungsvorrichtung nach Anspruch 1, ferner umfassend eine Empfangseinheit (330 bis 350), die konfiguriert ist, um eine Eingabe von einem Benutzer von einem ausgewählten aus der Vielzahl von Ursache-und-Wirkungs-Modellen zu empfangen,

wobei die Anzeige konfiguriert ist, um den Anomaliekausalfaktor, der für das ausgewählte aus der Vielzahl von Ursache-und-Wirkungs-Modellen geschätzt wurde, beruhend auf dem Ergebnis der Schätzung, die von der Schätzeinheit erhalten wurde, als Antwort auf das Empfangen der Eingabe des ausgewählten aus der Vielzahl von Ursache-und-Wirkungs-Modellen durch den Empfänger anzuzeigen.

3. Informationsverarbeitungsverfahren, umfassend:

Erzeugen einer Vielzahl von Ursache-und-Wirkungs-Modellen zwischen Variablen beruhend auf einer Beziehung zwischen einer Vielzahl von Mechanismen in einem Fertigungsprozess einer Fertigungslinie, einer Abhängigkeit zwischen einer Vielzahl von Ereignissen, die der Vielzahl von Mechanismen zugeordnet sind, oder einer steuerungsbasierten Beziehung zwischen der Vielzahl von Mechanismen;

Erhalten eines Ergebnisses einer Anomaliedetektion in der Fertigungslinie;

Berechnen eines Beitragsverhältnisses jeder Variable aus einer Vielzahl von Variablen, die zu einer Anomalie im Ergebnis der Anomaliedetektion beitragen; und

Schätzen eines Anomaliekausalfaktors für zumindest eines aus der Vielzahl von Ursache-und-Wirkungs-Modellen beruhend auf den berechneten Beitragsverhältnissen der zur Anomalie beitragenden Variablen; **dadurch gekennzeichnet, dass** das Verfahren ferner Folgendes umfasst:

Anzeigen des Anomaliekausalfaktors, der für das zumindest eine aus der Vielzahl von Ursache-und-Wirkungs-Modellen geschätzt wurde;

Registrieren einer Ereignisliste für ein abnormales Ereignis, wobei die Ereignisliste Informationselemente umfasst, einschließlich: eine Ereignisgliederung, Ereignisdaten eines erzeugten Ereignisses, den geschätzten Anomaliekausalfaktor, ein bestätigtes Ereignis, der der Vielzahl von Mechanismen zugeordnet ist, Details einer Ereignisaktivität und die Beitragsverhältnisse von Variablen, die zur Anomalie für das abnormale Ereignis beitragen;

Berechnen eines Ausmaßes an Ähnlichkeit zwischen den in der registrierten Ereignisliste enthaltenen Beitragsverhältnissen und den berechneten Beitragsverhältnissen der Anomalie beitragenden Variablen; und

Extrahieren einer Ereignisliste mit größerer Ähnlichkeit zwischen den Beitragsverhältnissen und Anzeigen der Ereignisliste.

4. Informationsverarbeitungsprogramm, das bewirkt, dass ein Computer Folgendes ausführt:

Erzeugen einer Vielzahl von Ursache-und-Wirkungs-Modellen zwischen Variablen beruhend auf einer Beziehung zwischen einer Vielzahl von Mechanismen in einem Fertigungsprozess einer Fertigungslinie, einer Abhängigkeit zwischen einer Vielzahl von Ereignissen, die der Vielzahl von Mechanismen zugeordnet sind, oder einer steuerungsbasierten Beziehung zwischen der Vielzahl von Mechanismen;

Erhalten eines Ergebnisses einer Anomaliedetektion in der Fertigungslinie;

Berechnen eines Beitragsverhältnisses jeder Variable aus einer Vielzahl von Variablen, die zu einer Anomalie im Ergebnis der Anomaliedetektion beitragen; und

Schätzen eines Anomaliekausalfaktors für zumindest eines aus der Vielzahl von Ursache-und-Wirkungs-Modellen beruhend auf den berechneten Beitragsverhältnissen der zur Anomalie beitragenden Variablen; **dadurch gekennzeichnet, dass** das Informationsverarbeitungsprogramm ferner den Computer zu Folgendem veranlasst:

Anzeigen des Anomaliekausalfaktors, der für das zumindest eine aus der Vielzahl von Ursache-und-Wirkungs-Modellen geschätzt wurde;

Registrieren einer Ereignisliste für ein abnormales Ereignis, wobei die Ereignisliste Informationselemente umfasst, einschließlich: eine Ereignisgliederung, Ereignisdaten eines erzeugten Ereignisses, den geschätzten Anomaliekausalfaktor, ein bestätigtes Ereignis, das der Vielzahl von Mechanismen zugeordnet ist, Details einer Ereignisaktivität und die Beitragsverhältnisse von Variablen, die zur Anomalie für das abnormale Ereignis beitragen;

Berechnen eines Ausmaßes an Ähnlichkeit zwischen den in der registrierten Ereignisliste enthaltenen Beitragsverhältnissen und den berechneten Beitragsverhältnissen der Anomalie beitragenden Variablen; und

Extrahieren einer Ereignisliste mit größerer Ähnlichkeit zwischen den Beitragsverhältnissen und Anzeigen der Ereignisliste.

**Revendications**

1. Dispositif de traitement d'informations, comprenant :

un générateur de modèle de cause à effet (114 à 116) configuré pour générer une pluralité de modèles de cause à effet entre des variables sur la base d'une relation entre une pluralité de mécanismes dans un processus de production d'une ligne de production, d'une dépendance entre une pluralité d'événements associés à la pluralité de mécanismes, ou d'une relation basée sur une commande entre la pluralité de mécanismes ;

un détecteur d'anomalie (117) configuré pour obtenir un résultat de détection d'anomalie dans la ligne de production ;

un calculateur de taux de contribution (118) configuré pour calculer un taux de contribution de chaque variable d'une pluralité de variables contribuant à une anomalie dans le résultat de détection d'anomalie ; et
un estimateur (119) configuré pour estimer un facteur causal d'anomalie pour au moins un de la pluralité de modèles de cause à effet sur la base des taux de contribution calculés des variables contribuant à une anomalie ;
**caractérisé en ce que** :

le dispositif de traitement d'informations comprend en outre un affichage (122) configuré pour afficher le facteur causal d'anomalie estimé pour le au moins un de la pluralité de modèles de cause à effet sur la base d'un résultat d'estimation obtenu par l'estimateur ;
dans lequel le dispositif de traitement d'informations comprend en outre une unité d'enregistrement de matière liée à un événement (120) configurée pour enregistrer une liste d'événements pour un événement anormal ;
dans lequel la liste d'événements comprend des éléments d'information comprenant : un aperçu d'événement, des données d'événement d'un événement généré, le résultat d'estimation de l'estimateur, un événement confirmé associé à la pluralité de mécanismes, des détails d'une activité d'événement, et les taux de contribution de variables contribuant à une anomalie pour ledit événement anormal ;
dans lequel le dispositif de traitement d'informations comprend en outre un estimateur d'événement (121) configuré pour calculer un degré de similitude entre les taux de contribution inclus dans la liste d'événements et les taux de contribution calculés des variables contribuant à une anomalie ; et
dans lequel l'estimateur d'événement est configuré pour extraire une liste d'événements avec une similitude plus élevée entre les taux de contribution et afficher la liste d'événements sur l'affichage.

2. Dispositif de traitement d'informations selon la revendication 1, comprenant en outre un récepteur (330 à 350) configuré pour recevoir une entrée par un utilisateur d'un certain sélectionné de la pluralité de modèles de cause à effet,
dans lequel l'affichage est configuré pour afficher le facteur causal d'anomalie estimé pour le certain sélectionné de la pluralité de modèles de cause à effet sur la base du résultat d'estimation obtenu par l'estimateur en réponse à la réception de l'entrée du certain sélectionné de la pluralité de modèles de cause à effet par le récepteur.

3. Procédé de traitement d'informations, comprenant les étapes consistant à :

générer une pluralité de modèles de cause à effet entre des variables sur la base d'une relation entre une pluralité de mécanismes dans un processus de production d'une ligne de production, d'une dépendance entre une pluralité d'événements associés à la pluralité de mécanismes, ou d'une relation basée sur une commande entre la pluralité de mécanismes ;
obtenir un résultat de détection d'anomalie dans la ligne de production ;
calculer un taux de contribution de chaque variable d'une pluralité de variables contribuant à une anomalie dans le résultat de la détection d'anomalie ; et
estimer un facteur causal d'anomalie pour au moins un de la pluralité de modèles de cause à effet sur la base des taux de contribution calculés des variables contribuant à une anomalie ;
**caractérisé en ce que** le procédé comprend en outre les étapes consistant à :

afficher le facteur causal d'anomalie estimé pour le au moins un de la pluralité de modèles de cause à effet ;
enregistrer une liste d'événements pour un événement anormal, la liste d'événements comprenant des éléments d'information comprenant : un aperçu d'événement, des données d'événement d'un événement généré, le facteur causal d'anomalie estimé, un événement confirmé associé à la pluralité de mécanismes, des détails d'une activité d'événement, et les taux de contribution de variables contribuant à une anomalie pour ledit événement anormal ;
calculer un degré de similitude entre les taux de contribution inclus dans la liste d'événements enregistrés et les taux de contribution calculés des variables contribuant à une anomalie ; et
extraire une liste d'événements avec une similitude plus élevée entre les taux de contribution et afficher la liste d'événements.

4. Programme de traitement d'informations qui amène un ordinateur à exécuter les étapes consistant à :

générer une pluralité de modèles de cause à effet entre des variables sur la base d'une relation entre une pluralité de mécanismes dans un processus de production d'une ligne de production, d'une dépendance entre une pluralité d'événements associés à la pluralité de mécanismes, ou d'une relation basée sur une commande entre la pluralité de mécanismes ;

obtenir un résultat de détection d'anomalie dans la ligne de production ;

calculer un taux de contribution de chaque variable d'une pluralité de variables contribuant à une anomalie dans le résultat de la détection d'anomalie ; et

estimer un facteur causal d'anomalie pour au moins un de la pluralité de modèles de cause à effet sur la base des taux de contribution des variables contribuant à une anomalie ;

**caractérisé en ce que** le programme de traitement d'informations amène en outre l'ordinateur à exécuter les étapes consistant à :

afficher le facteur causal d'anomalie estimé pour le au moins un de la pluralité de modèles de cause à effet ;

enregistrer une liste d'événements pour un événement anormal, la liste d'événements comprenant des éléments d'information comprenant : un aperçu d'événement, des données d'événement d'un événement généré, le facteur causal d'anomalie estimé, un événement confirmé associé à la pluralité de mécanismes, des détails d'une activité d'événement, et les taux de contribution de variables contribuant à une anomalie pour ledit événement anormal ;

calculer un degré de similitude entre les taux de contribution inclus dans la liste d'événements enregistrés et les taux de contribution calculés des variables contribuant à une anomalie ; et

extraire une liste d'événements avec une similitude plus élevée entre les taux de contribution et afficher la liste d'événements.

FIG.1

FIG.2

FIG.3

FIG.4

111 FIRST OBTAINING UNIT
220 PROCESS DATA
221 DEVICE SETTING POSITION DATA

114 FIRST RELATIONSHIP IDENTIFIER
CAUSE-AND-EFFECT RELATIONSHIP

112 SECOND OBTAINING UNIT
222 CONTROL PROGRAM

115 SECOND RELATIONSHIP DENTIFIER
CAUSE-AND-EFFECT RELATIONSHIP

113 THIRD OBTAINING UNIT
223 STATUS DATA

116 THIRD RELATIONSHIP IDENTIFIER
CAUSE-AND-EFFECT RELATIONSHIP

117 ABNORMALITY DETECTOR

118 CONTRIBUTION RATIO CALCULATOR

119 ESTIMATOR

120 EVENT-RELATED MATTER REGISTRATION UNIT

121 EVENT ESTIMATOR

122 DISPLAY

1 PROCESS ANALYZER

EP 4 202 584 B1

# FIG.5A

MATERIAL MA

| SEQUENTIAL ORDER | VARIABLE NAME |
|:---:|:---|
| 1 | CONVEYER SHAFT (ProductFeed) |
| 2 | FILM TRANSPORT SUB SHAFT (FilmFeedSub) |
| 3 | TOP SEAL SHAFT (TopSeal) |

MATERIAL MB

| SEQUENTIAL ORDER | VARIABLE NAME |
|:---:|:---|
| 1 | FILM TRANSPORT MAIN SHAFT (FilmFeedMain) |
| 2 | FILM TRANSPORT SUB SHAFT (FilmFeedSub) |
| 3 | TOP SEAL SHAFT (TopSeal) |

FIG.5B

FILM TRANSPORT MAIN SHAFT
(FilmFeedMain)

CONVEYER
SHAFT
(ProductFeed)

FILM
TRANSPORT
SUB SHAFT
(FilmFeedSub)

TOP SEAL
SHAFT
(TopSeal)

# FIG.6A

DEVICE SETTING POSITION

| POSITION | DEVICE NAME | DIRECTION |
|---|---|---|
| CONVEYER SHAFT (ProductFeed) | WORK DETECTION SENSOR (ProductDetectionSensorSignal) | → |
| CONVEYER SHAFT (ProductFeed) | WORK OVER-MOUNTING SENSOR (ProductOverMountDetectionSensorSignal) | → |
| FILM TRANSPORT SUB SHAFT (FilmFeedSub) | WORK MISPLACEMENT SENSOR (ProductMisplaceDetectionSensorSignal) | → |
| FILM TRANSPORT SUB SHAFT (FilmFeedSub) | CENTER SEAL HEATER (CenterHeaterDPC_MV) | ← |
| TOP SEAL SHAFT (TopSeal) | TOP SEAL UPPER HEATER (TopSealHeaterDPC_MV) | ← |
| TOP SEAL SHAFT (TopSeal) | TOP SEAL LOWER HEATER (TopSealLowerHeaterDPC_MC) | ← |

FIG.6B

WORK
DETECTION
SENSOR
(ProductDetection
SensorSignal)

FILM
TRANSPORT
MAIN SHAFT
(FilmFeedMain)

WORK
MISPLACEMENT
SENSOR
(ProductMisplaceDetection
SensorSignal)

TOP SEAL UPPER
HEATER
(TopSealHeaterDPC_MV)

CONVEYER
SHAFT
(ProductFeed)

FILM
TRANSPORT
SUB SHAFT
(FilmFeedSub)

TOP SEAL SHAFT
(TopSeal)

WORK
OVER-MOUNTING
SENSOR
(ProductOverMount
DetectionSensorSignal)

CENTER SEAL
HEATER
(CenterHeaterDPC_MV)

TOP SEAL
LOWER HEATER
(TopSealLowerHeater
DPC_MC)

FIG.7

```
         ┌─────────────────────┐
         │        START        │
         └─────────────────────┘
                    │
                    ▼            ⌐ S1401
    ┌─────────────────────────────┐
    │  CONSTRUCT ABSTRACT SYNTAX   │
    │  TREE FROM CONTROL PROGRAM   │
    └─────────────────────────────┘
                    │
                    ▼            ⌐ S1402
    ┌─────────────────────────────┐
    │  EXTRACT VARIABLE AND OPERATOR│
    │  FROM ABSTRACT SYNTAX TREE   │
    └─────────────────────────────┘
                    │
                    ▼            ⌐ S1403
    ┌─────────────────────────────┐
    │  REARRANGE EXTRACTED VARIABLE│
    │  AND OPERATOR IN SEQUENTIAL  │
    │  ORDER AND RESTRICT MONITORING│
    │  OBJECT TO TARGET VARIABLES  │
    └─────────────────────────────┘
                    │
                    ▼            ⌐ S1404
    ┌─────────────────────────────┐
    │  RANDOMLY PERFORM CONDITIONAL│
    │  BRANCHING TO INITIALIZE      │
    │  ORDERING OF VARIABLES        │
    └─────────────────────────────┘
                    │
                    ▼
         ┌─────────────────────┐
         │         END         │
         └─────────────────────┘
```

EP 4 202 584 B1

FIG.8

```
if (a > 0) {
  v1 = a:
} else {
  v2 = −a:
}
```
— 221

⇩

— 2211

## FIG.9A

# FIG.9B

## CAUSE-AND-EFFECT MODEL FOR CONTROL

FILM TRANSPORT MAIN SHAFT
WORK DETECTION SENSOR (FilmFeedMain)
(ProductDetectionSensorSignal)

WORK MISPLACEMENT SENSOR
(ProductMisplaceDetectionSensorSignal)

CONVEYER SHAFT
(ProductFeed)

FILM TRANSPORT
SUB SHAFT
(FilmFeedSub)

TOP SEAL SHAFT
(TopSeal)

WORK OVER-MOUNTING SENSOR
(ProductOverMountDetectionSensorSignal)

# FIG.10

DESIGN MODEL →

CONTROL MODEL →

```
           ┌─ 140
┌──────────────────┐
│ CONSTRAINT       │           CONSTRAINT MODEL
│ MODEL            │
│ GENERATOR        │
└──────────────────┘
```

STATUS DATA →

```
              ┌─ 142
┌──────────────────┐
│ CAUSE-           │ →
│ AND-EFFECT       │
│ MODEL FOR        │
│ DATA             │
│ GENERATOR        │
└──────────────────┘
```

FIG.11A

```
                    ┌──────────────┐
                    │    START     │
                    └──────┬───────┘
                           │         ⌒S101
              ┌────────────▼────────────┐
              │ OBTAIN PLURALITY OF PIECES OF │
              │ STATUS DATA              │
              └────────────┬────────────┘
                           │         ⌒S103
              ┌┤────────────▼────────────├┐
              ││    ANALYZE STATUS DATA    ││
              └┤─────────────────────────├┘
                           │         ⌒S105
              ┌────────────▼────────────┐
              │ CONSTRUCT NON-DIRECTED   │
              │ GRAPH INDICATING CAUSE-AND- │
              │ EFFECT RELATIONSHIP BETWEEN │
              │ MECHANISMS               │
              └────────────┬────────────┘
                           │         ⌒S106
              ┌────────────▼────────────┐
              │ OUTPUT CONSTRUCTED       │
              │ NON-DIRECTED GRAPH       │
              └────────────┬────────────┘
                           │
                    ┌──────▼───────┐
                    │     END      │
                    └──────────────┘
```

FIG.11B

```
┌─────────────────────┐
│     ANALYSIS OF      │
│     STATUS DATA      │
└─────────────────────┘
           │
           ▼              ⌐ S1301
┌───────────────────────────────────┐
│     CALCULATE FEATURE AMOUNT       │
│  FROM EACH PIECE OF STATUS DATA    │
└───────────────────────────────────┘
           │
           ▼              ⌐ S1302
┌───────────────────────────────────┐
│        CALCULATE CORRELATION       │
│      BETWEEN FEATURE AMOUNTS        │
└───────────────────────────────────┘
           │
           ▼              ⌐ S1303
┌───────────────────────────────────┐
│     CONSTRUCT NON-DIRECTED GRAPH    │
└───────────────────────────────────┘
           │
           ▼
┌─────────────────────┐
│       RETURN        │
└─────────────────────┘
```

FIG.12

FIG.13

## FIG.14

(1) LEARNED MODEL
(= NORMAL RANGE)

P1

(2) ABNORMALITY SCORE
(= DEGREE OF DEVIATION
FROM NORMAL RANGE)
⇒ DISTANCE

(3) CONTRIBUTION-RATIO
(= CONTRIBUTION RATIO
OF FEATURE AMOUNT TO
ABNORMALITY SCORE)
⇒ DIRECTION FROM
CENTER OF NORMAL
RANGE

P2

P3

● : LEARNED DATA INDICATING NORMAL STATUS

○ : DISCRIMINATION RESULT SIMILAR TO RESULT OF NORMAL RANGE

⊘ : DISCRIMINATION RESULT DIFFERENT ROM RESULT OF NORMAL RANGE

FIG.15A

## FIG.15B

FIG.16

SCORE — 310

TH1

T1

300

301

EP 4 202 584 B1

| KEY VARIABLE | CONTRIBUTION RATIO |
|---|---|
| FilmFeedSub | 45% |
| TopSeal | 23% |
| ProductFeed | 14% |
| FilmFeedMain | 4% |
| ProductDetection SensorSignal | 2% |

320

Chapter  RoomTemperature  RoomHumidity  ResFilmLength  CurrentTemperatureCenterSeal

CurrentTemperatureLowerTopSeal

ProductOverMountDetection SensorSignal  ProductDetectionSensorSignal  CenterHeaterDPC_MV

TopSealLowerHeaterDPC_MC

FilmFeedMain

ProductMisplaceDetection SensorSignal  ProductFeed

TopSealHeaterDPC_MV

FilmFeedSub  TopSeal

CurrentTemperatureUpperTopSeal

330
CAUSE-AND-EFFECT MODEL FOR DESIGN

340
CAUSE-AND-EFFECT MODEL FOR CONTROL

350
CAUSE-AND-EFFECT MODEL FOR DATA

FIG.17

| KEY VARIABLE | CONTRIBUTION RATIO |
|---|---|
| FilmFeedSub | 45% |
| TopSeal | 23% |
| ProductFeed | 14% |
| FilmFeedMain | 4% |
| ProductDetection | 2% |

CAUSE-AND-EFFECT MODEL FOR DESIGN

CAUSE-AND-EFFECT MODEL FOR CONTROL

CAUSE-AND-EFFECT MODEL FOR DATA

EP 4 202 584 B1

FIG.18A

FIG.18B

FIG.18C

| INDEX TO BE SELECTED OF HIERARCHY R2 | CAUSE-AND-EFFECT RELATIONSHIP FOR CONTROL | ▽ |
|---|---|---|

╱ 360

| INDEX TO BE SELECTED OF HIERARCHY R3 | CAUSE-AND-EFFECT RELATIONSHIP FOR DATA | ▽ |
|---|---|---|

╱ 370

# FIG.19

| EVENT OUTLINE | EVENT DATA | CAUSE-AND-EFFECT MODEL | ACTUAL PHYSICAL EVENT | RECOVERY WORK DETAIL | CONTRIBUTION RATIO |
|---|---|---|---|---|---|
| CENTER SEAL PORTION, POOR ADHESIVE STRENGTH | yyyymmdd-HHMMSS~ yyyymmdd-HHMMSS | | PRESS ROLLER WEAR | PRESS ROLLER REPLACEMENT | VARIABLE PA : 39.1<br>VARIABLE PB : 1.8<br>VARIABLE PC : 9.3<br>VARIABLE PD : 12.3 |
| CENTER SEAL PORTION, POOR ADHESIVE STRENGTH | yyyymmdd-HHMMSS~ yyyymmdd-HHMMSS | | LEATHER BELT WEAR | LEATHER BELT REPLACEMENT | VARIABLE PA : 19.1<br>VARIABLE PB : 21.8<br>VARIABLE PC : 39.3<br>VARIABLE PD : 12.3 |
| CENTER SEAL PORTION, POOR ADHESIVE STRENGTH | yyyymmdd-HHMMSS~ yyyymmdd-HHMMSS | | COLLECTOR RING, POOR CONTACT | COLLECTOR RING REPLACEMENT | VARIABLE PA : 29.1<br>VARIABLE PB : 31.8<br>VARIABLE PC : 29.3<br>VARIABLE PD : 2.3 |
| CENTER SEAL PORTION, POOR ADHESIVE STRENGTH | yyyymmdd-HHMMSS~ yyyymmdd-HHMMSS | | FILM ZIGZAG MOTION | FILM TRANSPORT SHAFT, STRAIN CORRECTION | VARIABLE PA : 9.1<br>VARIABLE PB : 11.8<br>VARIABLE PC : 19.3<br>VARIABLE PD : 12.3 |

## FIG.20

| EVENT OUTLINE | EVENT DATA | CAUSE-AND-EFFECT MODEL | ACTUAL PHYSICAL EVENT | RECOVERY WORK DETAIL | CONTRIBUTION RATIO | DEGREE OF SIMILARITY |
|---|---|---|---|---|---|---|
| CENTER SEAL PORTION, POOR ADHESIVE STRENGTH | yyyymmdd-HHMMSS~ yyyymmdd-HHMMSS | | PRESS ROLLER WEAR | PRESS ROLLER REPLACEMENT | VARIABLE PA : 39.1 VARIABLE PB : 1.8 VARIABLE PC : 9.3 VARIABLE PD : 12.3 | 73.2% |
| CENTER SEAL PORTION, POOR ADHESIVE STRENGTH | yyyymmdd-HHMMSS~ yyyymmdd-HHMMSS | | LEATHER BELT WEAR | LEATHER BELT REPLACEMENT | VARIABLE PA : 19.1 VARIABLE PB : 21.8 VARIABLE PC : 39.3 VARIABLE PD : 12.3 | 11.9% |
| CENTER SEAL PORTION, POOR ADHESIVE STRENGTH | yyyymmdd-HHMMSS~ yyyymmdd-HHMMSS | | COLLECTOR RING, POOR CONTACT | COLLECTOR RING REPLACEMENT | VARIABLE PA : 29.1 VARIABLE PB : 31.8 VARIABLE PC : 29.3 VARIABLE PD : 2.3 | 35.8% |
| CENTER SEAL PORTION, POOR ADHESIVE STRENGTH | yyyymmdd-HHMMSS~ yyyymmdd-HHMMSS | | FILM ZIGZAG MOTION | FILM TRANSPORT SHAFT, STRAIN CORRECTION. | VARIABLE PA : 9.1 VARIABLE PB : 11.8 VARIABLE PC : 19.3 VARIABLE PD : 12.3 | 15.3% |

FIG.21

```
        ┌─────────────┐
        │    START    │
        └─────────────┘
               │        ╭S2101
               ▼
┌───────────────────────────────┐
│       OBTAIN EVENT LIST        │
└───────────────────────────────┘
               │        ╭S2102
               ▼
┌───────────────────────────────┐
│  CALCULATE DEGREE OF SIMILARITY │
└───────────────────────────────┘
               │        ╭S2103
               ▼
┌───────────────────────────────┐
│    EXTRACT PROSPECTIVE EVENT   │
└───────────────────────────────┘
               │
               ▼
        ┌─────────────┐
        │     END     │
        └─────────────┘
```

**REFERENCES CITED IN THE DESCRIPTION**

**Patent documents cited in the description**

- JP 2009064407 A

- JP 2018120343 A